# EUROPEAN PATENT APPLICATION

(11) **EP 4 843 784 A1**
(43) Date of publication of application: **25.11.2026**
(21) Application number: 24918645.3
(22) Date of filing: 30.10.2024
(51) Int. Cl.: B41M 5/00, B41J 2/01, B41J 2/21, B44C 1/17, C09D 11/34, C09J 7/35, C09J 133/00, C09J 167/00, D06P 5/26, D06P 5/30

(54) **METHOD FOR PRODUCING RECORD, METHOD FOR PRODUCING TRANSFER PRODUCT, AND DEVICE FOR PRODUCING RECORD**

(30) Priority: 18.01.2024 JP 2024006303
(71) Applicant: Nippon Shokubai Co., Ltd., Osaka-shi, Osaka 541-0043 (JP)
(72) Inventor: NAKAMOTO, Keiichi, Suita-shi, Osaka 564-0034 (JP); YAMAMOTO, Tatsuya, Suita-shi, Osaka 564-0034 (JP); AKIYAMA, Tatsuhiko, Suita-shi, Osaka 564-0034 (JP); YAMAKAWA, Makoto, Tokyo 112-0002 (JP); SHINMACHI, Mitsuhiro, Tokyo 112-0002 (JP)
(74) Representative: Graf von Stosch Patentanwaltsgesellschaft mbH
(86) International application number: PCT/JP2024/038629
(87) International publication number: WO 2025/154358

(57) **Abstract**

There is provided a method for producing a recorded product, which can prevent the occurrence of cracks and can form an adhesive layer excellent in adhesiveness at the time of transfer. The method for producing a recorded product according to the present disclosure includes an image forming step, an adhesive ink depositing step, a first heating step, and a second heating step, and in the adhesive ink depositing step, an amount of the adhesive ink deposited is 3.0 mg/cm² or more, and a heating temperature in the second heating step is higher than a heating temperature in the first heating step by 40°C or more.

## Description

### Technical Field

The present invention relates to a method for producing a recorded product, a method for producing a transferred product, and an apparatus for producing a recorded product.

### Background Art

In the related art, there is known a technique in which an image is formed on a transfer sheet having a release layer formed on a surface of a base material, a hot-melt layer (adhesive layer) is formed on the entire surface of the transfer sheet, and the transfer sheet is heated and pressed to a transfer target object to transfer the image. For example, Patent Literature 1 describes a transfer printing method to a fabric using a hot-melt powder.

### Citation List

### Patent Literature

Patent Literature 1: JP 2019-171840 A

### Summary of Invention

### Technical Problem

The present inventors have studied a method for forming an adhesive layer with an inkjet ink containing a hot-melt resin instead of a powder to increase productivity in a transfer printing method to a fabric as disclosed in Patent Literature 1. However, to secure the adhesiveness of the adhesive layer at the time of transfer, it is necessary to deposit a large amount of ink onto the transfer sheet. Here, drying is required to form the adhesive layer, but the present inventors have found that when drying is performed at once, only the surface of the adhesive layer is dried, and a crack may occur in the adhesive layer.

An aspect of the present invention is directed to realizing a method for producing a recorded product, which can prevent the occurrence of cracks and form an adhesive layer having excellent adhesiveness at the time of transfer.

### Solution to Problem

To solve the above problem, a method for producing a recorded product according to an aspect of the present invention includes: an image forming step of depositing an ink containing a coloring material onto a recording medium by an inkjet method and forming an image; an adhesive ink depositing step of depositing an adhesive ink onto the image by an inkjet method; a first heating step of drying the adhesive ink; and a second heating step of further drying the adhesive ink after the first heating step and forming an adhesive layer, in which in the adhesive ink depositing step, an amount of the adhesive ink deposited is 3.0 mg/cm² or more, and a heating temperature of the recording medium in the second heating step is higher than a heating temperature of the recording medium in the first heating step by 40°C or more.

Furthermore, an apparatus for producing a recorded product according to an aspect of the present invention includes: a coloring material-containing ink head configured to deposit a coloring material-containing ink onto a recording medium by an inkjet method and to form an image; an adhesive ink head configured to deposit an adhesive ink onto the image by an inkjet method; a first heating device configured to dry the adhesive ink; and a second heating device configured to further dry the adhesive ink after the drying by the first heating device and to form an adhesive layer, in which an amount of the adhesive ink deposited by the adhesive ink head is 3.0 mg/cm² or more, and a heating temperature of the recording medium in the second heating device is higher than a heating temperature of the recording medium in the first heating device by 40°C or more.

### Advantageous Effects of Invention

According to an aspect of the present invention, it is possible to provide a method for producing a recorded product, which can prevent the occurrence of cracks and form an adhesive layer having excellent adhesiveness at the time of transfer.

### Brief Description of Drawings

FIG. 1 is a schematic view schematically illustrating a structure of an inkjet ejecting apparatus which can be used for performing a method for producing a recorded product according to an embodiment of the present invention.
FIG. 2 is a schematic view schematically illustrating a structure of an inkjet ejecting apparatus which can be used for performing a method for producing a recorded product according to an embodiment of the present invention.

### Description of Embodiments

Hereinafter, an embodiment of the present invention will be described in detail. In the present specification, a numerical range described as "from A to B" means "A or more and B or less" unless otherwise specified. Furthermore, the term "(meth)acrylic acid" means acrylic acid or methacrylic acid, and the term "(meth)acrylate" means acrylate or methacrylate. The same applies to terms such as "(meth)acryloxy" and "(meth)acryloyl". In addition, the phrase "structural unit derived from" corresponds to a structure in which an ethylenically unsaturated double bonds included in each monomer component is opened (a structure in which a double bond (C=C) becomes a single bond (-C-C-)).

### 1. Method for producing recorded product

A method for producing a recorded product according to an embodiment of the present invention includes: an image forming step of depositing an ink containing a coloring material onto a recording medium by an inkjet method and forming an image; an adhesive ink depositing step of depositing an adhesive ink onto the image by an inkjet method; a first heating step of drying the adhesive ink; and a second heating step of further drying the adhesive ink after the first heating step and forming an adhesive layer, in which an amount of the adhesive ink deposited in the adhesive ink depositing step is 3.0 mg/cm² or more, and a heating temperature of the recording medium in the second heating step is higher than a heating temperature of the recording medium in the first heating step by 40°C or more.

In the production method, when the amount of the adhesive ink deposited is 3.0 mg/cm² or more, an adhesive layer having excellent adhesiveness can be formed. In addition, in the production method, the adhesive ink is gradually dried by the first heating step and the second heating step. Thus, even when the amount of the adhesive ink deposited is relatively large, the adhesive ink can be dried evenly to the inside. This makes it possible to form a smooth adhesive layer having excellent adhesiveness without generating cracks.

In the present specification, an ink containing a coloring material is also referred to as a "coloring material-containing ink". The recorded product means a product obtained by printing a coloring material-containing ink on a recording medium and further printing an adhesive ink on the coloring material-containing ink. In the recorded product, it can also be said that an image is formed on a recording medium and an adhesive layer is formed on the image. The adhesive layer may be provided only in a portion where the image is formed, or may be provided not only in the portion where the image is formed but also in the periphery thereof. The recorded product may be a transfer medium to be used for transfer to a transfer target material.

The recorded product preferably has an ink-receiving layer provided on a surface of the recording medium on which an image is formed. That is, the recorded product preferably includes the ink-receiving layer between the recording medium and the image. When the ink-receiving layer is provided, it is possible to suppress flowing or collapse of the coloring material-containing ink, and it is possible to further enhance durability of the image after being transferred to a transfer target material. In a case where the recorded product has an ink-receiving layer, a part or all of the coloring material-containing ink may be absorbed in the ink-receiving layer.

The ink-receiving layer can be formed by coating a recording medium (or a recording medium provided with a release layer described below) with a solution containing a resin for forming the ink-receiving layer. Examples of the resin include a (meth)acrylic-based resin such as a (meth)acrylic acid ester resin and a (meth)acrylic acid ester-styrene copolymer resin; an olefin-based resin such as a polyethylene resin and a polypropylene resin; a silicone resin; and a polyvinyl alcohol resin.

A thickness of the ink-receiving layer is not particularly limited, but is preferably 30 nm or more, and more preferably 100 nm or more, from the viewpoint of suppressing flowing of the coloring material-containing ink. From the viewpoint of cost, the thickness of the ink-receiving layer is preferably 20 µm or less, and more preferably 10 µm or less. The thickness of the ink-receiving layer is preferably from 30 nm to 20 µm, and more preferably from 100 nm to 10 µm, from the above viewpoint.

In the recorded product, a release layer may be provided on at least one surface of the recording medium. That is, in the recorded product, the release layer may be provided between the recording medium and the image (preferably the ink-receiving layer) and/or on the side of the recording medium opposite to the side on which the image is formed. When the recorded product includes the release layer between the recording medium and the image (preferably the ink-receiving layer), the recording medium and the image are easily peeled off from each other, and thus the image is more easily transferred from the recorded product to the transfer target material. In addition, when the recorded product includes the release layer on the side opposite to the surface on which the image is formed, blocking between recorded products can be suppressed when the recorded products are stacked.

The release layer is preferably a layer obtained by coating at least one surface of the recording medium with a release agent. Examples of the release agent include a polyethylene wax-based release agent, a silicone-based release agent, and a fluorine-based release agent.

A thickness of the release layer is not particularly limited, but is preferably 10 nm or more, and more preferably 30 nm or more from the viewpoint of further improving transferability, and is preferably 2 µm or less from the viewpoint of suppressing bulkiness when the recorded product is formed into a roll shape. From the above viewpoint, the thickness of the release layer is preferably from 10 nm to 2 µm, and more preferably from 30 nm to 2 µm.

The sheet or the film in which an ink-receiving layer and/or a release layer is provided on a recording medium is commercially available, and the recorded product may be constituted by using the commercially available product. Examples of the commercially available product include a DTF Transfers film (available from One More Buck), and a PET film roll DFR-600 (available from IMAGE MAGIC Inc.).

In the present specification, the image also encompasses characters and patterns. The image may be a single layer or multilayer. For example, when a layer of a white ink is provided on a layer of a color ink on a recording medium, good color developability can be exhibited even in a case where an image is transferred onto a transfer target material of a dark color such as black.

### 1-1 Image forming step

An image forming step is a step of depositing a coloring material-containing ink onto a recording medium by an inkjet method and forming an image. Examples of the method of depositing a coloring material-containing ink onto the recording medium by an inkjet method include a method of ejecting the coloring material-containing ink from an inkjet head of an inkjet ejecting apparatus. This can deposit the coloring material-containing ink to a predetermined portion on the recording medium, whereby an image can be formed.

The recording medium is not particularly limited, and a material that is unlikely to shrink in a first heating step and a second heating step described below is preferred. Specific examples of the recording medium include metal, wood, plastic, and paper. Examples of the metal include aluminum and copper, and aluminum is preferred from the viewpoint of cost. Examples of the plastic include a polyolefin resin, a polyester resin, a polyamide resin, and a polycarbonate resin. From the viewpoint of cost, the polyester resin is preferable, and an aromatic polyester such as polyethylene terephthalate, polybutylene terephthalate, and polyethylene naphthalate is more preferable. Examples of the paper include plain paper, high-quality paper, and coated paper.

In particular, the recording medium is preferably plastic or paper from the viewpoint of cost, more preferably the polyester resin from the viewpoint of good heat resistance, still more preferably the aromatic polyester, and particularly preferably polyethylene terephthalate.

The recording medium may have a single-layer structure or a laminated structure. The recording medium is preferably in the form of a sheet or a film to facilitate the use of the recorded product. A thickness of the recording medium is preferably from 5 to 150 µm. In a case where the recording medium is a film, the obtained transfer medium is also referred to as a transfer film.

An ejection weight per unit area of the coloring material-containing ink is not particularly limited, but is preferably from 0.1 to 20 mg/cm², and more preferably from 0.5 to 10 mg/cm². When the image is formed in this range, there is a tendency that a transferred product having further excellent texture and fastness to wet rubbing is obtained. In the present specification, the fastness to wet rubbing means a property that can be evaluated by a wet rubbing test in accordance with the method specified in JIS L0849.

The hue of the color material-containing ink is not particularly limited, and it may be selected from black, white, and chromatic colors. The chromatic color includes colors having different densities such as light cyan, dark yellow, light magenta, and light black, in addition to magenta, yellow, and cyan, which are the three primary colors of subtractive color mixture. Further, one or more hues selected from red, blue, orange, green, and violet may be used. The hue of the coloring material-containing ink can be controlled by the coloring material described below. The coloring material-containing ink includes a color ink and a white ink described below. In the present specification, the color ink is an ink containing a non-white coloring material, and the white ink is an ink containing a white coloring material.

Examples of the coloring material include a pigment and dye, and in particular, the coloring material is preferably a pigment. The pigment is not particularly limited, and a pigment used in a general colored ink for inkjet textile printing can be used. Examples of the pigment include an organic pigment and an inorganic pigment, and one of these pigments may be used alone, or two or more types thereof may be used in combination. If necessary, the pigments may be used in combination with an extender pigment.

Examples of the organic pigment include benzidine, an azo pigment (such as Hansa yellow), a diazo pigment, an azomethine pigment, a methine pigment, an anthraquinone pigment, a phthalocyanine pigment (such as phthalocyanine blue), a perinone pigment, a perylene pigment, a diketopyrrolopyrrole pigment, a thioindigo pigment, an iminoisoindoline pigment, an isoindolinone pigment (such as iminoisoindolinone), a dioxazine pigment, a quinacridone pigment (such as Quinacridone Red and Quinacridone Violet), a flavanthrone pigment, an indanthrone pigment, an anthrapyrimidine pigment, a carbazole pigment, Monoarylide Yellow, Diarylide Yellow, Benzimidazolone Yellow, Tolyl Orange, Naphthol Orange, and a quinophthalone pigment.

The hue of the organic pigment is not particularly limited, and any of the above-described pigments, each exhibiting a hue of a chromatic color, can be used. Specific examples thereof include products of product numbers such as C.I. Pigment Yellow, C.I. Pigment Red, C.I. Pigment Orange, C.I. Pigment Violet, C.I. Pigment Blue, and C.I. Pigment Green.

Examples of the inorganic pigment include titanium dioxide, antimony trioxide, zinc oxide such as zinc white, lithopone, lead white, red iron oxide, black iron oxide, chromium oxide green, carbon black, chrome yellow, molybdenum red, ferric ferrocyanide (Prussian blue), ultramarine, and lead chromate. Examples of the inorganic pigment also include a pigment having a flat shape, such as mica, clay, aluminum powder, talc, and aluminum silicate; and an extender pigment such as calcium carbonate, magnesium hydroxide, aluminum hydroxide, barium sulfate, and magnesium carbonate. Examples of carbon black include furnace black, thermal lamp black, acetylene black, and channel black.

Among the inorganic pigments, preferable examples of the white pigment include titanium dioxide, antimony trioxide, zinc oxide such as zinc white, lithopone, lead white, calcium carbonate, magnesium hydroxide, aluminum hydroxide, barium sulfate, magnesium carbonate, clay, talc, and aluminum silicate. Among these, titanium dioxide is preferable from the viewpoint of having a high refractive index and excellent concealment property. Among the titanium dioxide, titanium dioxide having a rutile crystal structure is preferable.

Preferable examples of the non-white pigment include the above-mentioned organic pigments, red iron oxide, black iron oxide, chromium oxide green, carbon black, chrome yellow, molybdenum red, ferric ferrocyanide (Prussian blue), ultramarine, and lead chromate.

From the viewpoint of dispersion stability and color developability or concealment property, the average particle size of the pigment is preferably from 10 to 1000 nm, and preferably from 20 to 500 nm. In a case of the white pigment, the average particle size is preferably from 100 to 500 nm, from the viewpoint of a more excellent concealment property. The lower limit of the average particle size of the white pigment is more preferably 150 nm or more, and still more preferably 200 nm or more, and the upper limit thereof is more preferably 450 nm or less, and still more preferably 400 nm or less. From the above viewpoint, the average particle size of the white pigment is preferably from 100 nm to 500 nm, more preferably from 150 nm to 450 nm, and still more preferably from 200 nm to 400 nm. In the case of the non-white pigment, the average particle size is preferably from 20 to 200 nm, particularly from the viewpoint of color developability. The lower limit of the average particle size of the non-white pigment is more preferably 40 nm or more, and still more preferably 50 nm or more, and the upper limit thereof is more preferably 150 nm or less, and still more preferably 100 nm or less. From the above viewpoint, the average particle size of the non-white pigment is preferably from 20 nm to 200 nm, more preferably from 40 nm to 150 nm, and still more preferably from 50 nm to 100 nm.

The average particle size of the pigment can be measured using a laser diffraction scattering-type particle size distribution meter or by a dynamic light scattering method. For example, a cumulant average particle size measured by a dynamic light scattering method as shown in Examples described below can be adopted. However, when measurement by the dynamic light scattering method is difficult as in the case of a black pigment or the like, a 50% particle size in a volume-based particle size distribution obtained by measuring with a laser diffraction scattering-type particle size distribution meter can be adopted as the average particle size.

The pigment is preferably dispersion-stabilized with a dispersant in the ink. For this reason, it is preferable that a pigment, a dispersant, and a solvent are mixed and a dispersion treatment is performed by a bead mill or the like to prepare a pigment dispersion in which the pigment is dispersed in the solvent, and then the pigment dispersion is mixed with a resin and an optional component described below to produce the coloring material-containing ink.

Examples of the dispersant include poly(meth)acrylic acid (salt) such as poly(meth)acrylic acid and a poly(meth)acrylate salt; a copolymer of (meth)acrylic acid (salt) and one type or two or more types of the monomer components other than the (meth)acrylic acid (salt), such as an alkyl (meth)acrylate ester, (meth)acrylamide, styrene, maleic acid, maleic anhydride, maleate ester, and vinyl acetate; polyvinyl alcohol; and polyvinyl pyrrolidone.

The solvent in the pigment dispersion is preferably an aqueous solvent, and examples of the aqueous solvent include water and a mixed solvent of water and a water-soluble organic solvent described below.

The content of the pigment in the coloring material-containing ink is preferably from 1 to 50 mass%, and more preferably from 2 to 35 mass%. In particular, in the case where the pigment is a white pigment, the content of the white pigment in the coloring material-containing ink is preferably from 5 to 40 mass%, and more preferably from 10 to 30 mass%. In a case where the pigment is an organic pigment, the content of the organic pigment in the solid content of the coloring material-containing ink is preferably from 1 to 30 mass%, and more preferably from 2 to 15 mass%.

The coloring material-containing ink may contain a resin. The type of the resin contained in the coloring material-containing ink is not particularly limited, and examples thereof include a vinyl-based resin, an acrylic-based resin, a polyester-based resin, an olefin-based resin, a urethane-based resin, a fluorine-based resin, a silicone-based resin, an epoxy resin, a phenoxy resin, a phenol resin, and a xylene resin. Among these, an acrylic-based resin and/or a polyester-based resin is preferable, and an acrylic-based resin is particularly preferable.

In particular, the resin to be used in the coloring material-containing ink is preferably a resin of the same type as the resin to be used in the adhesive ink. That is, in a case where an acrylic-based resin and/or a polyester-based resin is used as the adhesive ink, it is preferable to use an acrylic-based resin and/or a polyester-based resin as the resin to be used in the coloring material-containing ink. In a case where an acrylic-based resin is used as the adhesive ink, it is more preferable to use an acrylic-based resin as the resin to be used in the coloring material-containing ink. In a case where a polyester-based resin is used as the adhesive ink, it is more preferable to use a polyester-based resin as the resin to be used in the coloring material-containing ink. When the combination of these is used, an interface between the adhesive layer formed of the adhesive ink and the image formed of the coloring material-containing ink in the recorded product and the transferred product is less likely to be peeled off, and as a result, transferability and fastness of the obtained transferred product are further improved.

As the acrylic-based resin to be used in the coloring material-containing ink, an acrylic-based resin known in the related art can be used. Among them, a resin containing a constituent unit derived from a (meth)acrylic-based monomer is preferable. Specific examples of the (meth)acrylic-based monomer are the same as those described as the (meth)acrylic-based monomer to be used in the adhesive ink described below. The (meth)acrylic-based monomer preferably includes at least one selected from the group consisting of alkyl (meth)acrylate, (meth)acrylic acid, and hydroxyalkyl (meth)acrylate, and more preferably includes all of (meth)acrylic acid, alkyl (meth)acrylate, and hydroxyalkyl (meth)acrylate.

The alkyl (meth)acrylate is preferably an alkyl (meth)acrylate having an alkyl group with 1 to 18 carbon atoms, and more preferably an alkyl (meth)acrylate having an alkyl group with 4 to 12 carbon atoms. A content of the constituent unit derived from the alkyl (meth)acrylate is preferably from 20 to 99 mass%, more preferably from 30 to 98 mass%, and still more preferably from 40 to 95 mass%, relative to a total of 100 mass% of constituent units derived from all monomer components constituting the acrylic-based resin to be used in the coloring material-containing ink.

A content of the constituent unit derived from (meth)acrylic acid is preferably from 0.1 to 5 mass%, more preferably from 0.5 to 4 mass%, and still more preferably from 1.0 to 3 mass%, relative to a total of 100 mass% of constituent units derived from all monomer components constituting the acrylic-based resin to be used in the coloring material-containing ink. When the content is adjusted to fall within the above range, fastness to rubbing and fastness to washing of the obtained transferred product can be further improved.

A content of the constituent unit derived from hydroxyalkyl (meth)acrylate is preferably from 0.1 to 5 mass%, more preferably from 0.3 to 4 mass%, and still more preferably from 0.5 to 3 mass%, relative to a total of 100 mass% of constituent units derived from all monomer components constituting the acrylic-based resin to be used in the coloring material-containing ink. When the content is adjusted to fall within the above range, water resistance of the obtained transferred product can be enhanced.

The acrylic-based resin to be used in the coloring material-containing ink may further have a constituent unit derived from a styrene-based monomer. A total content of the constituent unit derived from the (meth)acrylic-based monomer and the constituent unit derived from the styrene-based monomer is preferably 50 mass% or more, more preferably 80 mass% or more, and still more preferably 95 mass% or more, and may be 100 mass%, relative to a total of 100 mass% of constituent units derived from all monomer components constituting the acrylic-based resin to be used in the coloring material-containing ink. The total content of the constituent unit derived from the (meth)acrylic-based monomer and the constituent unit derived from the styrene-based monomer is preferably from 50 to 100 mass%, more preferably from 80 to 100 mass%, and still more preferably from 95 to 100 mass%, from the above viewpoint. Specific examples of the styrene-based monomer are the same as the styrene-based monomers to be used in the adhesive ink described below.

The acrylic-based resin to be used in the coloring material-containing ink may further have a constituent unit derived from a monomer other than the (meth)acrylic-based monomer and the styrene-based monomer. Examples of the monomer other than the (meth)acrylic-based monomer and the styrene-based monomer include an acid group-containing monomer (excluding (meth)acrylic acid) and another monomer to be used in the adhesive ink described below.

As the polyester-based resin to be used in the coloring material-containing ink, a polyester-based resin known in the related art can be used. The polyester-based resin is preferably a polycondensate of an aromatic dicarboxylic acid and a diol compound. Specific examples of the aromatic dicarboxylic acid and the diol compound are the same as those exemplified in the description of the polyester-based resin to be used in the adhesive ink described below.

A weight average molecular weight (Mw) of the resin to be used in the coloring material-containing ink is not particularly limited, but is preferably 50000 or more, more preferably 300000 or more, still more preferably 550000 or more, and particularly preferably 600000 or more, from the viewpoint of suppressing flowing of the coloring material-containing ink after printing. An upper limit value of the weight average molecular weight of the resin to be used in the coloring material-containing ink is preferably 5000000 or less from the viewpoint of improving film-forming properties and water resistance. The weight average molecular weight (Mw) of the resin to be used in the coloring material-containing ink is preferably from 50000 to 5000000, more preferably from 300000 to 5000000, still more preferably from 550000 to 5000000, and particularly preferably from 600000 to 5000000, from the above viewpoint.

A glass transition temperature (Tg) of the resin to be used in the coloring material-containing ink is not particularly limited. However, from the viewpoint of further enhancing texture of the obtained transferred product, the glass transition temperature is preferably from - 50 to 10°C, more preferably from -45 to 5°C, and still more preferably from -40 to 3°C.

The resin is preferably contained in the form of emulsion particles in the coloring material-containing ink. Preferred aspects of the composition, physical properties, and the like of the resin constituting the emulsion particles are the same as those of emulsion particles in the adhesive ink described below.

A content of the resin (preferably emulsion particles) in the coloring material-containing ink is, for example, from 5 to 40 mass%, preferably from 8 to 30 mass%, and more preferably from 10 to 25 mass%. Adjusting the content of the resin to fall within the above range allows viscosity of the coloring material-containing ink to be maintained within an appropriate range.

The coloring material-containing ink preferably further contains a solvent. As the solvent, an organic solvent or an aqueous solvent can be suitably used. However, an aqueous solvent is preferably used from the viewpoint of reducing an environmental load. Examples of the aqueous solvent include water and a mixed solvent of water and a water-soluble organic solvent. From the viewpoint of enhancing moisture retention and compatibility with the resin, the aqueous solvent contained in the coloring material-containing ink preferably contains a water-soluble organic solvent. Preferred aspects of a type and a content of the water-soluble organic solvent are the same as preferred aspects of the type and content of the water-soluble organic solvent in the adhesive ink described below.

The content of the solvent in the coloring material-containing ink only needs to be set depending on desired viscosity of the coloring material-containing ink, and is not particularly limited. However, the content of the solvent is, for example, from 40 to 90 mass%, preferably from 50 to 88 mass%, and more preferably from 55 to 85 mass%.

The coloring material-containing ink may further contain a crosslinking agent. It is presumed that using the crosslinking agent results in the formation of a crosslinked structure due to interaction or a chemical reaction with the components, such as the resin, contained in the coloring material-containing ink, whereby a tough coating film can be formed, and thus fastness to wet rubbing and fastness to washing of the obtained transferred product are further improved. Examples of the crosslinking agent that can be used in the coloring material-containing ink include the compounds exemplified as the crosslinking agent that can be used in the adhesive ink described below, and preferred aspects thereof are also the same.

The content of the crosslinking agent is not particularly limited, but is preferably from 0.05 to 10 parts by mass, more preferably from 0.1 to 8 parts by mass, and still more preferably from 0.2 to 5 parts by mass, relative to 100 parts by mass of the resin.

The coloring material-containing ink may further contain a surfactant. Examples of the surfactant that can be used in the coloring material-containing ink include the compounds exemplified as the surfactant that can be used in the adhesive ink described below, and preferred aspects thereof are also the same. A content of the surfactant is not particularly limited, but is preferably from 0.01 to 2 mass% and more preferably from 0.1 to 1 mass%, relative to 100 mass% of the coloring material-containing ink.

The coloring material-containing ink may contain an additional component other than the above-described components within a range in which the object of the present invention is not impaired. For example, the coloring material-containing ink may contain an appropriate amount of an additive such as a leveling agent, an ultraviolet absorber, an ultraviolet stabilizer, a thickener, a wetting agent, a plasticizer, a stabilizer, an antifoaming agent, a dye, an antioxidant, a crosslinking promoter, a pH adjuster, or a preservative. In a case where the additional component is added, the content thereof is not particularly limited, but is preferably 2 mass% or less, and preferably 1 mass% or less, relative to 100 mass% of the coloring material-containing ink. In order to exhibit the effect from the addition thereof, the content of the additional component is preferably 0.01 mass% or more, and more preferably 0.05 mass% or more. From the above viewpoint, the content of the additional component is preferably from 0.01 to 2 mass%, and more preferably from 0.05 to 1 mass%.

The image forming step may include a color ink depositing step of depositing a color ink onto the recording medium by an inkjet method, and a white ink depositing step of depositing a white ink onto a coating film of the color ink on the recording medium by an inkjet method. Through such a step, a white layer is formed between the transfer target material and the image in the obtained transferred product, and thus, particularly in a case where a transfer target material having a deep color is used, the color developability becomes good. In addition, when the white ink is deposited onto the coating film of the color ink and an adhesive layer is further formed thereon, a transferred product having an image excellent in color developability and adhesiveness can be obtained.

The production method may include an image drying step of drying the image before an adhesive ink depositing step. The image drying step is a step of evaporating a part or all of components (i.e., solvent) excluding a solid content in the coloring material-containing ink deposited onto the recording medium. This prevents flowing of the coloring material-containing ink, and thus a clear image can be obtained. In addition, by drying the image, the adhesive ink is less likely to penetrate into the image, and thus the adhesiveness at the time of transfer is improved.

In the image drying step, preferably 10 mass% or more, more preferably 15 mass% or more, and still more preferably 20 mass% or more of 100 mass% of the components excluding the solid content in the coloring material-containing ink is evaporated. When the evaporation amount is adjusted to fall within the above range, it is possible to suppress flowing of the adhesive ink in the adhesive ink depositing step described below. In addition, in the image drying step, preferably 80 mass% or less, more preferably 70 mass% or less, still more preferably 60 mass% or less, and particularly preferably 50 mass% or less or 40 mass% or less of 100 mass% of the components excluding the solid content in the coloring material-containing ink is evaporated. From the above viewpoint, the evaporation amount is preferably from 10 to 80 mass%, more preferably from 10 to 70 mass%, still more preferably from 15 to 60 mass%, still even more preferably from 20 to 50 mass%, and particularly preferably from 20 to 40 mass%.

When the evaporation amount is adjusted to fall within the above range, the coloring material-containing ink layer and the adhesive ink layer are appropriately mixed at the interface therebetween, and peeling at the interface at the time of transfer printing can be suppressed, thereby further improving the transferability. Note that conditions for achieving a desired evaporation amount can be determined by ejecting a certain weight of a coloring material-containing ink having a known solid content concentration onto a base material, measuring the total weight of the ink and the recording medium after drying and the weight of only the recording medium with a precision balance, and calculating an evaporation amount in advance. The image drying step only needs to be performed under the same conditions.

The device for performing the image drying step is not particularly limited, and for example, a contact heating device such as a platen heater or a rubber heater, a non-contact heating device such as a warm air heater, an infrared heater, or a halogen heater, or the like can be used. Among them, from the viewpoint of uniformly performing drying, a contact heating device is preferable, and a platen heater is more preferable. For example, the coloring material-containing ink can be dried by heating the recording medium from the back surface thereof with the contact heating device. In the present specification, in the recording medium, a surface onto which the coloring material-containing ink is deposited is referred to as a front surface of the recording medium, and a surface on a side opposite to the surface onto which the coloring material-containing ink is deposited is referred to as a back surface of the recording medium.

The above-described evaporation amount can be adjusted by controlling the heating temperature, the heating time, the warm air temperature, the air flow rate, and the like. The heating temperature in the image drying step is preferably 30°C or higher, and more preferably 40°C or higher, from the viewpoint of shortening the heating time. When the heating temperature is too high, heat may be conducted to the inkjet head to cause nozzle clogging. Thus, the heating temperature is preferably 100°C or lower, more preferably 90°C or lower, still more preferably 80°C or lower, and particularly preferably 70°C or lower. From the above viewpoint, the heating temperature in the image drying step is preferably from 30 to 100°C, more preferably from 30 to 90°C, still more preferably from 40 to 80°C, and particularly preferably from 40 to 70°C.

Note that the image drying step may be performed simultaneously with the image forming step, may be performed after the image forming step, or may be performed simultaneously with and after the image forming step. In a case where the image drying step is performed simultaneously with the image forming step, the image drying step may be performed continuously or intermittently from the start to the end of the image forming step, but is preferably performed continuously.

### 1-2. Adhesive ink depositing step

The adhesive ink depositing step is a step of depositing the adhesive ink onto the image by an inkjet method. Examples of the apparatus for performing the adhesive ink depositing step include the same inkjet ejecting apparatus as used in the image forming step. In a case where the inkjet ejecting apparatus is used, the adhesive ink can be printed by ejecting the adhesive ink from an inkjet head and depositing the adhesive ink onto the image formed in the image forming step. This forms an adhesive ink layer on the image.

When an apparatus equipped with a plurality of inkjet heads is used as the inkjet ejecting apparatus, printing of the coloring material-containing ink and printing of the adhesive ink can be continuously performed. For example, when an ink set including one type or two or more types of coloring material-containing inks and the adhesive ink is mounted in respective color ink cartridges of the inkjet ejecting apparatus and an ink is ejected from each inkjet head corresponding to each ink cartridge, printing of the coloring material-containing ink and printing of the adhesive ink can be continuously performed.

In the adhesive ink depositing step, the amount of the adhesive ink deposited is 3.0 mg/cm² or more, preferably 4.0 mg/cm² or more, more preferably 5.0 mg/cm² or more, and still more preferably 8.0 mg/cm² or more. From the viewpoint of ease of drying, the amount of the adhesive ink deposited is preferably 35 mg/cm² or less, and more preferably 20 mg/cm² or less. From the above viewpoint, the amount of the adhesive ink deposited is preferably from 4.0 to 35 mg/cm², more preferably from 5.0 to 35 mg/cm², and still more preferably from 8.0 to 20 mg/cm².

The adhesive ink preferably contains a resin, an aqueous organic solvent, and water. A single type of a resin may be used alone, or two or more types of resins may be used in combination.

The glass transition temperature (Tg) of the resin is, for example, 30°C or lower, preferably 25°C or lower, more preferably 20°C or lower, still more preferably 15°C or lower, and still even more preferably 10°C or lower. When the Tg of the resin is adjusted to fall within the above range, texture of the obtained transferred product is excellent. The lower limit of the Tg of the resin is, for example, -50°C or higher, preferably -30°C or higher, more preferably - 20°C or higher, and still more preferably -10°C or higher. In a case where the recorded product is wound into a roll shape to be stored, a problem of blocking due to the adhesive ink may occur. However, when the lower limit of the Tg of the resin is adjusted to fall within the above range, such blocking can be suppressed. From the above viewpoint, the Tg of the resin is preferably from -50 to 30°C, more preferably from -30 to 25°C, still more preferably from -20 to 20°C, still even more preferably -10 to 15°C, and particularly preferably from -10 to 10°C.

The Tg of the resin can be determined by differential scanning calorimetry (DSC). Specifically, for example, using a differential scanning calorimeter ("DSC 3500" available from NETZSCH), the resin is heated and cooled following steps described below to create a DSC curve, and a midpoint glass transition temperature determined from the DSC curve at the time of second temperature rising only needs to be taken as Tg of the resin. (Step 1) The temperature is raised from -50°C to 150°C at a rate of 10°C/min and held at 150°C for 5 minutes.

(Step 2) The temperature is decreased from 150°C to -50°C at a rate of 10°C/min and held at -50°C for 5 minutes.

(Step 3) The temperature is raised from -50°C to 150°C at a rate of 10°C/min.

Note that in a case where the resin has a core-shell structure or the like, a plurality of glass transition temperatures may be observed. In this case, one of the glass transition temperatures only needs to satisfy the above range, but it is preferable that all the glass transition temperatures satisfy the above range.

In addition, in a case where two or more types of resins are used, it is preferable that the Tg of a resin being the main component satisfies the above range, and it is more preferable that the Tg of each resin is within the above range. Note that the resin being the main component refers to a resin that accounts for preferably 50 mass% or more, more preferably 60 mass% or more, still more preferably 80 mass% or more, and particularly preferably 90 mass% or more, in 100 mass% of the total of the resins contained in the adhesive ink.

The weight average molecular weight of the resin contained in the adhesive ink is 10000 or more, and preferably 20000 or more, and may be 30000 or more or 50000 or more. When the weight average molecular weight of the resin is adjusted to fall within the above range, it is possible to prevent the adhesive ink from flowing after printing. In addition, the weight average molecular weight of the resin is 700000 or less, preferably 500000 or less, and more preferably 400000 or less, and may be 350000 or less or 300000 or less. When the Tg of the resin is adjusted to 30°C or lower while the weight average molecular weight of the resin is adjusted to fall within the above range, transferability during transfer printing and fastness to wet rubbing of the obtained transferred product are excellent. From the above viewpoint, the weight average molecular weight of the resin is preferably from 10000 to 700000, more preferably from 20000 to 500000, still more preferably from 30000 to 400000, particularly preferably from 50000 to 350000, and most preferably from 50000 to 300000.

The weight average molecular weight of the resin can be calculated by a standard polystyrene conversion method using gel permeation chromatography (GPC). Specifically, for example, the weight average molecular weight (in terms of polystyrene) can be calculated from a chart of gel permeation chromatography created using gel permeation chromatography (available from Tosoh Corporation, product number: HLC-8320GPC, column: TSK-GEL SuperMultiporeHZ, eluent: THF) with a resin solution as a sample, in which the resin is dissolved in tetrahydrofuran (THF) to reach a concentration of 0.2 mass%, and a calibration curve created using standard polystyrene available from Tosoh Corporation.

In a case where two or more types of resins are used, the weight average molecular weight of the resin mixture may satisfy the above range, but it is preferable that the weight average molecular weight of each resin is within the above range.

The type of the resin contained in the adhesive ink is not particularly limited, and examples thereof include a vinyl-based resin, an acrylic-based resin, a polyester-based resin, an olefin-based resin, a urethane-based resin, a fluorine-based resin, a silicone-based resin, an epoxy-based resin, a phenoxy-based resin, a phenol-based resin, and a xylene-based resin. Among them, the adhesive ink preferably contains one or more resins selected from the group consisting of an acrylic-based resin and a polyester-based resin.

The acrylic-based resin is a resin having a constituent unit derived from a (meth)acrylic-based monomer. A content of the constituent unit derived from the (meth)acrylic-based monomer is preferably 20 mass% or more, more preferably 30 mass% or more, and still more preferably 40 mass% or more, and may be 70 or 85 mass% or more, relative to a total of 100 mass% of constituent units derived from all monomer components constituting the acrylic-based resin. The content of the constituent unit derived from the (meth)acrylic-based monomer may be 100 mass% or less, or may be 90 mass% or less. When the content of the constituent unit derived from the (meth)acrylic-based monomer is adjusted to fall within the above range, the fastness to wet rubbing of the obtained transferred product is further improved. From the above viewpoint, the content of the constituent unit derived from the (meth)acrylic-based monomer is preferably from 20 to 100 mass%, more preferably from 30 to 100 mass%, still more preferably from 40 to 100 mass%, particularly preferably from 70 to 90 mass%, and most preferably from 85 to 90 mass%.

Examples of the (meth)acrylic-based monomer include a monofunctional (meth)acrylate and a polyfunctional (meth)acrylate.

Examples of the monofunctional (meth)acrylate include:
(meth)acrylic acid;
alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth)acrylate, 2-ethylhexyl (meth)acrylate, n-octyl (meth)acrylate, 2-octyl (meth)acrylate, tridecyl (meth)acrylate, cyclohexyl (meth)acrylate, n-lauryl (meth)acrylate, dodecyl (meth)acrylate, stearyl (meth)acrylate, and isobornyl (meth)acrylate;
fluoroalkyl (meth)acrylates such as trifluoroethyl (meth)acrylate, tetrafluoropropyl (meth)acrylate, and octafluoropentyl (meth)acrylate;
aralkyl (meth)acrylates such as benzyl (meth)acrylate, phenylethyl (meth)acrylate, methylbenzyl (meth)acrylate, and naphthylmethyl (meth)acrylate;
hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate;
epoxy group-containing (meth)acrylates such as glycidyl (meth)acrylate and α-methylglycidyl (meth)acrylate;
alkoxyalkyl group-containing (meth)acrylates such as methoxyethyl (meth)acrylate, methoxybutyl (meth)acrylate, ethoxybutyl (meth)acrylate, and trimethylolpropane tripropoxy (meth)acrylate;
silyl group-containing (meth)acrylates such as γ-(meth)acryloyloxypropyltrimethoxysilane, γ-(meth)acryloyloxypropylhydroxysilane, and γ-(meth)acryloyloxypropylmethylhydroxysilane;
carbonyl group-containing (meth)acrylates such as (meth)acryloxyalkyl propenal, acetonyl (meth)acrylate, diacetone (meth)acrylate, 2-hydroxypropyl (meth)acrylate acetyl acetate, butanediol-1,4-acrylate acetyl acetate, and 2-(acetoacetoxy) ethyl (meth)acrylate;
aziridinyl group-containing (meth)acrylates such as (meth)acryloylaziridine and 2-aziridinylethyl (meth)acrylate;
oxo group-containing (meth)acrylates such as ethylene glycol (meth)acrylate, ethylene glycol methoxy (meth)acrylate, and a (di)ethylene glycol (methoxy) (meth)acrylate such as diethylene glycol (meth)acrylate and diethylene glycol methoxy (meth)acrylate; and
piperidine group-containing (meth)acrylates such as 4-(meth)acryloyloxy-2,2,6,6-tetramethylpiperidine and 4-(meth)acryloyloxy-1,2,2,6,6-pentamethylpiperidine, and one type or two or more types thereof can be selected and used.

Among them, the monofunctional (meth)acrylate preferably includes (meth)acrylic acid and/or an alkyl (meth)acrylate, and more preferably includes (meth)acrylic acid and an alkyl (meth)acrylate. The alkyl (meth)acrylate is preferably an alkyl (meth)acrylate having an alkyl group with 1 to 18 carbon atoms, and more preferably an alkyl (meth)acrylate having an alkyl group with 4 to 12 carbon atoms. It is also preferable to use two or more types of alkyl (meth)acrylates having different numbers of carbon atoms in combination. Examples thereof include an aspect in which an alkyl (meth)acrylate having 1 to 3 carbon atoms and an alkyl (meth)acrylate having 4 to 18 carbon atoms are used in combination, an aspect in which an alkyl (meth)acrylate having 4 to 6 carbon atoms and an alkyl (meth)acrylate having 7 to 18 carbon atoms are used in combination, and an aspect in which an alkyl (meth)acrylate having 1 to 3 carbon atoms, an alkyl (meth)acrylate having 4 to 6 carbon atoms, and an alkyl (meth)acrylate having 7 to 18 carbon atoms are used in combination.

A content of the constituent unit derived from the monofunctional (meth)acrylate is preferably 20 mass% or more, more preferably 30 mass% or more, and still more preferably 40 mass% or more, relative to a total of 100 mass% of constituent units derived from all monomer components constituting the acrylic-based resin. The content of the constituent unit derived from the monofunctional (meth)acrylate may be 100 mass% or less, or 90 mass% or less. The content of the constituent unit derived from the monofunctional (meth)acrylate is preferably from 20 to 100 mass%, more preferably from 30 to 100 mass%, and still more preferably from 40 to 90 mass%, from the above viewpoint.

Examples of the polyfunctional (meth)acrylate include:
a di(meth)acrylate of a polyhydric alcohol having 1 to 10 carbon atoms such as ethylene glycol di(meth)acrylate, propylene glycol di(meth)acrylate, 1,3-butanediol di(meth)acrylate, 1,4-butanediol di(meth)acrylate, 1,6-hexanediol di(meth)acrylate, ethylene oxide-modified 1,6-hexanediol di(meth)acrylate, 1,9-nonanediol di(meth)acrylate, propylene oxide-modified neopentyl glycol di(meth)acrylate, tripropylene glycol di(meth)acrylate;
an alkyl di(meth)acrylate in which from 2 to 50 moles of alkylene oxide groups having 2 to 4 carbon atoms are added, such as polyethylene glycol di(meth)acrylate in which from 2 to 50 moles of ethylene oxide are added, polypropylene glycol di(meth)acrylate in which from 2 to 50 moles of propylene oxide are added, and tripropylene glycol di(meth)acrylate;
a tri(meth)acrylate of a polyhydric alcohol having 1 to 10 carbon atoms such as ethoxylated glycerin tri(meth)acrylate, propylene oxide-modified glycerol tri(meth)acrylate, ethylene oxide-modified trimethylolpropane tri(meth)acrylate, trimethylolpropane tri(meth)acrylate, pentaerythritol monohydroxy tri(meth)acrylate, and trimethylolpropane triethoxy tri(meth)acrylate;
a tetra(meth)acrylate of a polyhydric alcohol having 1 to 10 carbon atoms such as pentaerythritol tetra(meth)acrylate, dipentaerythritol tetra(meth)acrylate, and ditrimethylolpropane tetra(meth)acrylate;
a penta(meth)acrylate of a polyhydric alcohol having 1 to 10 carbon atoms, such as pentaerythritol penta(meth)acrylate and dipentaerythritol (monohydroxy) penta(meth)acrylate;
a hexa(meth)acrylate of a polyhydric alcohol having 1 to 10 carbon atoms such as pentaerythritol hexa(meth)acrylate;
an epoxy group-containing (meth)acrylate such as bisphenol A di(meth)acrylate, 2-(2'-vinyloxyethoxyethyl) (meth)acrylate, and epoxy (meth)acrylate; and
a polyfunctional (meth)acrylate such as urethane (meth)acrylate, and one type or two or more types thereof can be selected and used.

A content of the constituent unit derived from the polyfunctional (meth)acrylate is preferably 10 mass% or less, more preferably 5 mass% or less, and still more preferably 1 mass% or less, relative to a total of 100 mass% of constituent units derived from all monomer components constituting the acrylic-based resin.

The acrylic-based resin preferably has a constituent unit derived from an acid group-containing monomer. When the acrylic-based resin includes the structural unit derived from an acid group-containing monomer, stability of the acrylic-based resin is favorable. The acrylic-based resin may have a single type of the structural unit derived from the acid group-containing monomer, or may have two or more types thereof.

The acid group-containing monomer need only be a monomer having at least one acid group and at least one polymerizable unsaturated group per molecule. Examples of the acid group include a sulfo group and a carboxy group, and a carboxy group is preferable. The acid group-containing monomer may be the above-described (meth)acrylic acid, or may be another acid group-containing monomer. Specific examples of the acid group-containing monomer include unsaturated monocarboxylic acids such as (meth)acrylic acid, cinnamic acid, and crotonic acid; unsaturated dicarboxylic acids such as maleic acid, fumaric acid, itaconic acid, and citraconic acid; monoesters of unsaturated dicarboxylic acids such as monomethyl maleate, monobutyl maleate, monomethyl itaconate, and monobutyl itaconate; anhydrides of unsaturated dicarboxylic acids such as maleic anhydride; 2-acryloyloxyethylsuccinic acid, 2-acryloyloxyethylphthalic acid, and 2-acryloyloxyethylhexahydrophthalic acid. Among these, unsaturated monocarboxylic acids are preferable, and (meth)acrylic acid is more preferable.

In a case where the acrylic-based resin includes the structural unit derived from the acid group-containing monomer, a content of the structural unit derived from the acid group-containing monomer is preferably 0.1 mass% or more, more preferably 0.5 mass% or more, and still more preferably 1.0 mass% or more, relative to a total of 100 mass% of constituent units derived from all monomer components constituting the acrylic-based resin. The content of the structural unit derived from the acid group-containing monomer is preferably 5 mass% or less, more preferably 4 mass% or less, and still more preferably 3 mass% or less. From the above viewpoint, the content of the structural unit derived from the acid group-containing monomer is preferably from 0.1 to 5 mass%, more preferably from 0.5 to 4 mass%, and still more preferably from 1.0 to 3 mass%.

The acrylic-based resin may further have a constituent unit derived from a styrene-based monomer. A total content of the constituent unit derived from the (meth)acrylic-based monomer and the constituent unit derived from the styrene-based monomer is preferably 50 mass% or more, more preferably 80 mass% or more, and still more preferably 95 mass% or more, and may be 100 mass%, relative to a total of 100 mass% of constituent units derived from all monomer components constituting the acrylic-based resin. From the above viewpoint, the total content of the constituent unit derived from the (meth)acrylic-based monomer and the constituent unit derived from the styrene-based monomer is preferably from 50 to 100 mass%, more preferably from 80 to 100 mass%, and still more preferably from 95 to 100 mass%.

Examples of the styrene-based monomer include styrene, α-methylstyrene, p-methylstyrene, tert-methylstyrene, chlorostyrene, vinyl toluene, 2-styrylethyltrimethoxysilane, and divinylbenzene, and one type or two or more types can be selected and used. In the styrene-based monomer, a functional group such as an alkyl group such as a methyl group or a tert-butyl group, a nitro group, a nitrile group, an alkoxyl group, an acyl group, a sulfone group, a hydroxyl group, or a halogen atom may be present in a benzene ring constituting the styrene-based monomer. Among the styrene-based monomers, styrene is preferable from the viewpoint of enhancing water resistance.

A content of the constituent unit derived from the styrene-based monomer may be, for example, 10 mass% or more, and 30 mass% or more, relative to a total of 100 mass% of constituent units derived from all monomer components constituting the acrylic-based resin. The content of the constituent unit derived from the styrene-based monomer is preferably 80 mass% or less, more preferably 70 mass% or less, and still more preferably 60 mass% or less. From the above viewpoint, the content of the constituent unit derived from the styrene-based monomer is preferably from 10 to 80 mass%, more preferably from 10 to 70 mass%, and still more preferably from 30 to 60 mass%.

The acrylic-based resin may further have one type or two or more types of constituent units derived from a monomer other than the (meth)acrylic-based monomer, the acid group-containing monomer, and the styrene-based monomer (hereinafter, sometimes referred to as "the other monomer").

The other monomer is not particularly limited as long as it has at least one polymerizable unsaturated group in the molecule, and examples thereof include: an addition-polymerizable oxazoline such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline; a vinyl-based monomer such as vinyl acetate, vinyl chloride, and vinyl benzoate; acrylonitrile; a (meth)acrylamide-based monomer such as (meth)acrylamide, N-monomethyl (meth)acrylamide, N-monoethyl (meth)acrylamide, and N,N-dimethyl (meth)acrylamide; and an olefin-based monomer such as ethylene and propylene.

The acrylic-based resin can be produced by a known polymerization method, and examples thereof include a solution polymerization method, a bulk polymerization method, a suspension polymerization method, and an emulsion polymerization method. Among these, an emulsion polymerization method is preferable. According to the emulsion polymerization method, an emulsion in which the acrylic-based resin is dispersed as an emulsion particle in an aqueous solvent is obtained.

The polyester-based resin is not particularly limited as long as it is a polymer having an ester bond in the main chain, but is preferably a polycondensate of an aromatic dicarboxylic acid and a diol compound. Examples of the aromatic dicarboxylic acid include phthalic acid, isophthalic acid, and terephthalic acid. Examples of the diol compound include: an aliphatic diol such as ethylene glycol, 1,2-propanediol, 1,3-propanediol, and neopentyl glycol; an aromatic alcohol such as an alkylene oxide adduct of bisphenol A such as polyoxypropylene-2,2-bis(4-hydroxyphenyl)propane and polyoxyethylene-2,2-bis(4-hydroxyphenyl)propane; and hydrogenated bisphenol A or an alkylene (having 2 to 4 carbon atoms) oxide (average number of moles added: from 1 to 16) adduct thereof.

An aliphatic polybasic acid may be added to the polyester-based resin for the purpose of improving fluidity. Examples of the aliphatic polybasic acid include: a saturated aliphatic dicarboxylic acid or an anhydride thereof such as succinic acid, succinic anhydride, glutaric acid, adipic acid, azelaic acid, sebacic acid, dodecanedioic acid, and 1,4-cyclohexanedicarboxylic acid; an unsaturated aliphatic dicarboxylic acid or an anhydride thereof such as fumaric acid, maleic acid, maleic anhydride, itaconic acid, itaconic anhydride, citraconic acid, and citraconic anhydride; and a tri- or higher-functional aliphatic carboxylic acid such as 1,2,3,4-butanetetracarboxylic acid.

As the polyester-based resin, an appropriately synthesized product may be used, or a commercially available product may be used. Examples of the commercially available product include Vylonal series (available from Toyobo Co., Ltd.) such as MD1335 and MD1480, and Elitel series (available from UNITIKA LTD.) such as KT-0507, KT-8904, KT-8701, and KT-9204.

The urethane-based resin is a resin having a urethane bond. As the urethane-based resin, a polyether type urethane resin containing an ether bond in the main chain, a polyester type urethane resin containing an ester bond in the main chain, a polycarbonate type urethane resin containing a carbonate bond in the main chain, or the like, in addition to the urethane bond, may be used.

As the urethane-based resin, an appropriately synthesized product may be used, or a commercially available product may be used. Examples of the commercially available products include SUPERFLEX 300, SUPERFLEX 420, SUPERFLEX 460, SUPERFLEX 460S, SUPERFLEX 470, SUPERFLEX 740 (glass transition temperature: -34°C), SUPERFLEX 150HS (available from DKS Co., Ltd.), DAOTAN TW6493/35WA (available from Daicel-Allnex Ltd.), TAKELAC W-6061 (available from Mitsui Chemicals, Inc.), UW-1701F (available from Ube Industries, Ltd.), PERMARIN UA-150, and EUCOAT DA-200 (available from Sanyo Chemical Industries, Ltd.).

In the adhesive ink, the resin is preferably contained as emulsion particles. A shape of the emulsion particles is not particularly limited, but is usually spherical. The shape can be measured using a transmission electron microscope or a scanning electron microscope. The emulsion particles may have a single-layer structure or a multilayer structure (such as a core-shell structure).

The average particle size of the emulsion particles is preferably 50 nm or more, more preferably 80 nm or more, and still more preferably 100 nm or more. The average particle size of the emulsion particles is preferably 500 nm or less, more preferably 450 nm or less, still more preferably 400 nm or less, still even more preferably 350 nm or less, and particularly preferably 300 nm or less. When the average particle size of the emulsion particles is adjusted to fall within the above range, the emulsion particles can be easily blended at a high concentration while the viscosity of the adhesive ink is maintained in an appropriate range. From the above viewpoint, the average particle size of the emulsion particles is preferably from 50 to 500 nm, more preferably from 80 to 450 nm, still more preferably from 100 to 400 nm, still even more preferably from 100 to 350 nm, and particularly preferably from 100 to 300 nm. Note that the average particle size of the emulsion particles may be a cumulant average particle size measured by a dynamic light scattering method as shown in the Examples described below.

A content of the resin (preferably the emulsion particles) in the adhesive ink is, for example, 10 mass% or more, preferably 15 mass% or more, more preferably 18 mass% or more, and still more preferably 20 mass% or more, and is, for example, 35 mass% or less, preferably 30 mass% or less, and more preferably 25 mass% or less. When the content of the resin is adjusted to fall within the above range, the effect of the present invention can be further enhanced while maintaining the viscosity of the adhesive ink within an appropriate range. From the above viewpoint, the content of the resin is preferably from 10 to 35 mass%, more preferably from 15 to 30 mass%, still more preferably from 18 to 25 mass%, and particularly preferably from 20 to 25 mass%.

Water and the water-soluble organic solvent act as a diluent to adjust the viscosity of the adhesive ink. A total content of water and the water-soluble organic solvent in the adhesive ink may be set depending on the desired viscosity of the adhesive ink, and is not particularly limited. However, the total content is, for example, from 40 to 90 mass%, preferably from 50 to 88 mass%, and more preferably from 55 to 85 mass%.

Examples of the water-soluble organic solvent include:
a lower alcohol such as methyl alcohol, ethyl alcohol, n-propyl alcohol, isopropyl alcohol, n-butyl alcohol, and tert-butyl alcohol;
glycol such as propylene glycol, 1,3-propanediol, glycerin, dipropylene glycol, tripropylene glycol, diethylene glycol, triethylene glycol, and tetraethylene glycol;
an ether of monoethylene glycol such as monoethylene glycol monomethyl ether, monoethylene glycol monoethyl ether, monoethylene glycol monopropyl ether, monoethylene glycol monoisopropyl ether, monoethylene glycol monobutyl ether, and monoethylene glycol monoisobutyl ether;
an ether of monopropylene glycol such as monopropylene glycol monomethyl ether, monopropylene glycol monoethyl ether, monopropylene glycol monopropyl ether, monopropylene glycol monoisopropyl ether, monopropylene glycol monobutyl ether, and monopropylene glycol monoisobutyl ether;
an ether of diethylene glycol such as diethylene glycol monomethyl ether, diethylene glycol monoethyl ether, diethylene glycol monopropyl ether, diethylene glycol monoisopropyl ether, diethylene glycol monobutyl ether, and diethylene glycol monoisobutyl ether;
an ether of dipropylene glycol such as dipropylene glycol monomethyl ether, dipropylene glycol monoethyl ether, dipropylene glycol monopropyl ether, dipropylene glycol monoisopropyl ether, dipropylene glycol monobutyl ether, and dipropylene glycol monoisobutyl ether;
an ether of polyethylene glycol such as a monomethyl ether of polyethylene glycol (number of moles of added EO = from 2 to 10, preferably from 2 to 4), a monoethyl ether of polyethylene glycol (number of moles of added EO = from 2 to 10, preferably from 2 to 4), a monopropyl ether of polyethylene glycol (number of moles of added EO = from 2 to 10, preferably from 2 to 4), a monoisopropyl ether of polyethylene glycol (number of moles of added EO = from 2 to 10, preferably from 2 to 4), a monobutyl ether of polyethylene glycol (number of moles of added EO = from 2 to 10, preferably from 2 to 4), and a monoisobutyl ether of polyethylene glycol (number of moles of added EO = from 2 to 10, preferably from 2 to 4);
an ether of polypropylene glycol such as a monomethyl ether of polypropylene glycol (number of moles of added EO = from 2 to 10, preferably from 2 to 4), a monoethyl ether of polypropylene glycol (number of moles of added EO = from 2 to 10, preferably from 2 to 4), a monopropyl ether of polypropylene glycol (number of moles of added EO = from 2 to 10, preferably from 2 to 4), a monoisopropyl ether of polypropylene glycol (number of moles of added EO = from 2 to 10, preferably from 2 to 4), a monobutyl ether of polypropylene glycol (number of moles of added EO = from 2 to 10, preferably from 2 to 4), and a monoisobutyl ether of polypropylene glycol (number of moles of added EO = from 2 to 10, preferably from 2 to 4);
a heterocyclic compound such as 2-pyrrolidone and N-methyl-2-pyrrolidone; and
a ketone such as acetone and methyl ethyl ketone.

When the adhesive ink contains the water-soluble organic solvent, moisture retention and compatibility with the resin can be enhanced. A single type of the water-soluble organic solvent may be used alone, or two or more types thereof may be used in combination. The content of the water-soluble organic solvent is preferably from 10 to 55 parts by mass, and more preferably from 15 to 45 parts by mass, relative to 100 parts by mass of water contained in the adhesive ink.

In particular, from the viewpoint of further enhancing moisture retention, the water-soluble organic solvent is preferably a water-soluble organic solvent having a boiling point of 150°C or higher, more preferably a water-soluble organic solvent having a boiling point of 180°C or higher, and still more preferably a water-soluble organic solvent having a boiling point of 200°C or higher. Examples of the water-soluble organic solvent having a boiling point of 150°C or higher include propylene glycol, diethylene glycol, triethylene glycol, and glycerin. A content of the water-soluble organic solvent that further enhances moisture retention is preferably from 10 to 50 parts by mass, and more preferably from 15 to 40 parts by mass, relative to 100 parts by mass of water contained in the adhesive ink.

From the viewpoint of further enhancing compatibility with the resin, a water-soluble organic solvent having a hydrophobic group and a hydroxyl group is preferable, and among them, at least one selected from the group consisting of diethylene glycol monoisopropyl ether, diethylene glycol monobutyl ether, diethylene glycol monoisobutyl ether, monobutyl ether of polyethylene glycol (number of moles of added EO = from 2 to 4) (in particular, triethylene glycol monobutyl ether), and monomethyl ether of polypropylene glycol (number of moles of added EO = from 2 to 10, preferably from 2 to 4) (in particular, tripropylene glycol monomethyl ether) is preferable. A content of the water-soluble organic solvent that further enhances compatibility is preferably from 1 to 15 parts by mass, and more preferably from 2 to 8 parts by mass, relative to 100 parts by mass of water contained in the adhesive ink.

A total content of the resin, water, and the water-soluble organic solvent in the adhesive ink is not particularly limited, but is, for example, 70 mass% or more, preferably 85 mass% or more, and more preferably 95 mass% or more. The total content may be 100 mass%, and may be 99.5 mass% or less. From the above viewpoint, the total content of the resin, water, and the water-soluble organic solvent is preferably from 70 to 100 mass%, more preferably from 85 to 100 mass%, and still more preferably from 95 to 99.5 mass%.

The adhesive ink may further contain a crosslinking agent. It is presumed that using the crosslinking agent results in the formation of a crosslinked structure due to interaction or a chemical reaction with the components, such as the resin, contained in the adhesive ink, whereby a tough coating film can be formed, and thus fastness to wet rubbing and fastness to washing of the obtained transferred product are further improved.

Examples of the crosslinking agent include an isocyanate compound, an epoxy compound, a melamine compound, a metal chelate compound, an aziridine compound, a mercapto compound, and an oxazoline compound, and an oxazoline compound is preferable. A single type of the crosslinking agent may be used, or two or more types thereof may be used in combination.

The oxazoline compound as the crosslinking agent means a compound having two or more oxazoline groups in the molecule. Examples of the oxazoline compound include, but are not limited to, 2,2'-bis(2-oxazoline), 2,2'-methylene-bis(2-oxazoline), 2,2'-ethylene-bis(2-oxazoline), 2,2'-trimethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4,4'-dimethyl-2-oxazoline), 2,2'-p-phenylene-bis(2-oxazoline), 2,2'-m-phenylene-bis(2-oxazoline), 2,2'-m-phenylene-bis(4,4'-dimethyl-2-oxazoline), bis(2-oxazolinylcyclohexane) sulfide, bis(2-oxazolinylnorbornane) sulfide, and an oxazoline group-containing polymer.

Among the above oxazoline compounds, a water-soluble oxazoline compound is preferable, and an oxazoline group-containing polymer is preferable, from the viewpoint of excellent crosslinking performance. The oxazoline group-containing polymer can be produced by a known production method. Examples of the production method include a method of polymerizing one type or two or more types of addition-polymerizable oxazolines or monomer components containing an addition-polymerizable oxazoline and a monomer copolymerizable with the addition-polymerizable oxazoline. The copolymerizable monomer is preferably a monomer that is copolymerizable with an addition-polymerizable oxazoline without having a functional group that reacts with an oxazoline group. For example, in the monomer components, a monomer that does not have a functional group that reacts with an oxazoline group can be exemplified. Examples thereof include a (meth)acrylic-based monomer such as an alkyl (meth)acrylate; a styrene-based monomer such as styrene, α-methylstyrene, and chloromethylstyrene; a vinyl-based monomer such as vinyl acetate, vinyl chloride, and vinyl benzoate; acrylonitrile; a (meth)acrylamide-based monomer such as acrylamide; and an olefin-based monomer such as ethylene and propylene.

Examples of the addition-polymerizable oxazoline include a compound having a polymerizable unsaturated group and an oxazoline group in the molecule, such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Among the oxazoline group-containing polymers, a water-soluble oxazoline group-containing polymer is preferable, and can be produced by the same method as the method for producing the oxazoline group-containing polymer. Examples of the water-soluble oxazoline group-containing polymer includes a polymer that has an acrylic-based resin or the like as a main chain and contain an oxazoline group in a side chain.

The oxazoline group-containing polymer to be used may be a commercially available product. Examples of the commercially available product include water-soluble polymers such as trade name: EPOCROS WS-500 and EPOCROS WS-700 available from NIPPON SHOKUBAI CO., LTD., and emulsion-type polymers such as EPOCROS K-2010, EPOCROS K-2020, and EPOCROS K-2030 available from NIPPON SHOKUBAI CO., LTD. Among these, EPOCROS WS-500 or EPOCROS WS-700 that is the water-soluble polymer is preferable.

A content of the crosslinking agent (preferably, the oxazoline compound) is not particularly limited, but is preferably from 0.05 to 10 parts by mass, more preferably from 0.1 to 8 parts by mass, and still more preferably from 0.2 to 5 parts by mass, relative to 100 parts by mass of the resin.

The adhesive ink may further contain a surfactant. Using the surfactant enables the surface tension to be adjusted to a level suitable for inkjet ejection. A content of the surfactant is not particularly limited, but is preferably from 0.01 to 2 mass% and more preferably from 0.1 to 1 mass%, relative to 100 mass% of the adhesive ink.

As the surfactant, for example, an acetylene glycol-based surfactant, a silicone-based surfactant, or a fluorine-based surfactant is preferably used. Among these, a silicone-based surfactant is more preferable, and a polyether-modified silicone-based surfactant is still more preferable.

The adhesive ink may further contain an additional component other than the components described above, as long as the object of the present invention is not impaired. For example, the adhesive ink may contain an appropriate amount of an additive such as a dispersant, a leveling agent, an ultraviolet absorber, an ultraviolet stabilizer, a thickener, a wetting agent, a plasticizer, a stabilizer, an antifoaming agent, a pigment, a dye, an antioxidant, a crosslinking promoter, a pH adjuster, a preservative, a chain transfer agent, or a chelating agent.

In a case where the additional component is added, a content thereof is not particularly limited, but is preferably 2 mass% or less, and preferably 1 mass% or less, relative to 100 mass% of the adhesive ink. In order to exhibit the effect from the addition thereof, the content of the additional component is preferably 0.01 mass% or more, and more preferably 0.05 mass% or more. From the above viewpoint, the content of the additional component is preferably from 0.01 to 2 mass%, and more preferably from 0.05 to 1 mass%.

The adhesive ink is preferably a clear ink. This provides an adhesive layer having excellent adhesiveness and does not affect the appearance of the image after transfer. In the present specification, the clear ink means an ink that contains substantially no coloring material. For example, the content of the coloring material in 100 mass% of the adhesive ink is 0.1 mass% or less, and the adhesive ink preferably contains no coloring material. On the other hand, the adhesive ink may be a white ink for the purpose of enhancing the color developability of the image, and the adhesive ink may be a color ink for the purpose of using the adhesive layer as a colored layer.

### 1-3. First heating step

The first heating step is a step of drying the adhesive ink. The first heating step is a step of evaporating a part of components (i.e., solvent) excluding a solid content in the coloring material-containing ink and the adhesive ink printed on the coloring material-containing ink.

The device for performing the first heating step (also referred to as a first heating device) is not particularly limited, and for example, a contact heating device such as a platen heater or a rubber heater, a non-contact heating device such as a warm air heater, an infrared heater, or a halogen heater, or the like can be used. From the viewpoint of uniformly performing drying, the first heating step is preferably performed by a contact heating device, and more preferably performed by a platen heater. In addition, from the viewpoint of suppressing temperature unevenness in the coating film, it is preferable to use a non-contact heating device in combination with the contact heating device in the first heating step. For example, the first heating step may be performed by a non-contact heating device provided in a carriage unit in addition to the platen heater, or may be performed by using a large non-contact heating device covering the platen heater together. For example, the coloring material-containing ink and the adhesive ink can be dried by heating the recording medium from the back surface thereof by the platen heater. In addition, the recording medium may be heated from the front surface thereof by a halogen heater provided in the carriage unit. This makes it possible to dry the ink coating film from both the front and back surfaces.

The material of a platen portion of the platen heater is preferably metal, and more preferably aluminum. Aluminum has high thermal conductivity, and thus, it is possible to suppress occurrence of temperature unevenness in heating. This makes it possible to uniformly heat the ink, and thus, unevenness is unlikely to occur in the image and the adhesive layer, and the smoothness of the recorded product can be improved.

The evaporation amount of the solvent can be adjusted by controlling the heating temperature, the heating time, the warm air temperature, the air flow rate, and the like. The heating temperature in the first heating step is preferably 30°C or higher, and more preferably 40°C or higher, from the viewpoint of shortening the heating time. When the heating temperature is too high, heat may be conducted to the inkjet head to cause nozzle clogging. Thus, the heating temperature is preferably 100°C or lower, more preferably 90°C or lower, still more preferably 80°C or lower, and particularly preferably 70°C or lower. When the heating temperature in the first heating step is set to such a range, the aqueous adhesive ink does not boil in the first heating step, and thus, the adhesive layer can be formed without cracking. From the above viewpoint, the heating temperature in the first heating step is preferably from 30 to 100°C, more preferably from 30 to 90°C, still more preferably from 40 to 80°C, and particularly preferably from 40 to 70°C.

The heating time in the first heating step is preferably 20 seconds or longer, more preferably 40 seconds or longer, and still more preferably 1 minute or longer, from the viewpoint of sufficiently evaporating the solvent. The heating time in the first heating step is preferably 10 minutes or shorter, more preferably 7 minutes or shorter, and even more preferably 5 minutes or shorter, from the viewpoint of productivity. From the above viewpoint, the heating time in the first heating step is preferably from 20 seconds to 10 minutes, more preferably from 40 seconds to 7 minutes, and still more preferably from 1 minute to 5 minutes.

The first heating step may be performed simultaneously with the adhesive ink depositing step, may be performed after the adhesive ink depositing step, or may be performed simultaneously with and after the adhesive ink depositing step. When the first heating step is performed simultaneously with the adhesive ink depositing step, the coating film of the adhesive ink can be efficiently dried. In a case where the first heating step is performed simultaneously with the adhesive ink depositing step, the first heating step may be performed continuously or intermittently from the start to the end of the adhesive ink depositing step, but is preferably performed continuously.

### 1-4. Second heating step

The second heating step is a step of further drying the adhesive ink after the first heating step and forming an adhesive layer. It can also be said that the second heating step is a step of further evaporating components (i.e., solvent) excluding a solid content in the coloring material-containing ink and the adhesive ink printed on the coloring material-containing ink. In the present specification, the adhesive layer means a layer obtained by drying the adhesive ink layer (a coating film of the adhesive ink).

The device for performing the second heating step (also referred to as a second heating device) is not particularly limited, and for example, a contact heating device such as a platen heater or a rubber heater, a non-contact heating device such as a warm air heater, an infrared heater, or a halogen heater, or the like can be used. The second heating step is preferably performed by a non-contact heating device.

The first heating device and the second heating device may be independent devices. In this case, the first heating device and the second heating device may be connected to each other by a conveyance path for conveying the recording medium. For example, the recording medium may be heated from the back surface by the contact heating device in the first heating step, and the recording medium may be heated from the front surface by the non-contact heating device in the second heating step. This makes it possible to dry the ink coating film from both the front and back surfaces.

Alternatively, the first heating device and the second heating device may be configured as one device, and the first heating step and the second heating step may be performed in the one device. In a case where the first heating device and the second heating device are configured as one device, the temperature may be increased stepwise along the conveyance path in the one device. In this case, when the difference between the lowest temperature and the highest temperature is 40°C or more, it can be said that the first heating step and the second heating step are performed.

The heating temperature of the recording medium in the second heating step is higher than the heating temperature of the recording medium in the first heating step by 40°C or more, preferably 50°C or more, more preferably 60°C or more, and particularly preferably 70°C or more. The upper limit value of the difference between the heating temperature of the recording medium in the second heating step and the heating temperature of the recording medium in the first heating step may be, for example, 130°C or less, preferably 100°C or less, and more preferably 90°C or less. From the above viewpoint, the difference between the heating temperature of the recording medium in the second heating step and the heating temperature of the recording medium in the first heating step is preferably from 40 to 130°C, more preferably from 50 to 100°C, still more preferably from 60 to 100°C, and particularly preferably from 70 to 90°C.

The heating temperature in the second heating step may be, for example, 100°C or higher or higher than 100°C, and from the viewpoint of shortening the heating time, the heating temperature is preferably 130°C or higher, more preferably 135°C or higher, and still more preferably 140°C or higher. The heating temperature in the second heating step is preferably 180°C or lower, more preferably 170°C or lower, and still more preferably 160°C or lower, from the viewpoint of suppressing deformation of the recording medium. From the above viewpoint, the heating temperature in the second heating step is preferably from 100 to 180°C, more preferably higher than 100°C and 180°C or lower, further preferably from 130 to 170°C, particularly preferably from 135 to 160°C, and most preferably from 140 to 160°C.

The heating time in the second heating step is preferably 1 minute or longer, more preferably 2 minutes or longer, and still more preferably 3 minutes or longer, from the viewpoint of obtaining an adhesive layer from which the solvent has been sufficiently evaporated. The heating time in the second heating step is preferably 20 minutes or shorter, more preferably 15 minutes or shorter, and still more preferably 10 minutes or shorter, from the viewpoint of productivity. From the above viewpoint, the heating time in the second heating step is preferably from 1 minute to 20 minutes, more preferably from 2 minutes to 15 minutes, and still more preferably from 3 minutes to 10 minutes.

In the second heating step, it is preferable to perform suction drying together with heating. That is, the second heating device may include a suction drying device. This makes it possible to quickly discharge moisture to the outside, which contributes to shortening of the time required for drying and improvement of productivity. It is more preferable to combine heating by an infrared heater and suction drying.

A thickness of the adhesive layer is not particularly limited, but is preferably 0.5 µm or more, more preferably 2 µm or more, still more preferably 5 µm or more or more than 5 µm, and particularly preferably 8 µm or more, in terms of film thickness after drying. When the adhesive layer is adjusted to have the above thickness, transferability and fastness to wet rubbing of the obtained transferred product are further improved. In addition, the thickness of the adhesive layer is preferably 200 µm or less, more preferably 150 µm or less, and still more preferably 100 µm or less, and may be 50 µm or less, from the viewpoint of further improving texture of the obtained transferred product. From the above viewpoint, the thickness of the adhesive layer is preferably from 0.5 to 200 µm, more preferably from 2 to 150 µm, still more preferably from 5 to 100 µm, still even more preferably more than 5 µm and 100 µm or less, and particularly preferably from 8 to 50 µm.

It is preferable that the recording medium is conveyed substantially flat through the image forming step, the adhesive ink depositing step, the first heating step, and the second heating step. Note that the phrase "conveyed substantially flat" means that the height of the conveyance path of the recording medium is substantially the same throughout the image forming step, the adhesive ink depositing step, the first heating step, and the second heating step. In other words, the recording medium is preferably conveyed substantially horizontally. Accordingly, unevenness is unlikely to occur in the image and the adhesive layer, which improves the smoothness of the recorded product. For example, the difference in height of the conveyance path of the recording medium with respect to the horizontal plane throughout the image forming step, the adhesive ink depositing step, the first heating step, and the second heating step is preferably 3 cm or less, more preferably 2 cm or less, and still more preferably 1 cm or less. The difference in height of the conveyance path means a difference between the highest position and the lowest position of the conveyance path.

The conveying speed of the recording medium is preferably 8 cm/min or more. This further improves productivity. The conveying speed of the recording medium is preferably 64 cm/min or less. In a case of attempting to sufficiently dry the adhesive layer at a high conveying speed, it is necessary to increase the heating time, that is, to increase the residence time in the heating device, and thus, it may be necessary to increase the size of the heating device. When the conveying speed is 64 cm/min or less, the heating device can be downsized. The conveying speed of the recording medium is preferably from 8 to 64 cm/min, more preferably from 10 to 60 cm/min, and still more preferably from 15 to 55 cm/min.

After the second heating step, a step of winding the recorded product (winding step) may be performed. That is, a winding device may be provided downstream of the second heating device. Preferably, the image forming step, the adhesive ink depositing step, the first heating step, the second heating step, and the winding step are performed as a series of operations (continuously). This further improves productivity.

### 2. Apparatus for producing recorded product

An apparatus for producing a recorded product according to an aspect of the present invention includes: a coloring material-containing ink head configured to deposit an ink containing a coloring material onto a recording medium by an inkjet method and to form an image; an adhesive ink head configured to deposit an adhesive ink onto the image by an inkjet method; a first heating device configured to dry the adhesive ink; and a second heating device configured to further dry the adhesive ink after the drying in the first heating device and to form an adhesive layer. An amount of the adhesive ink deposited by the adhesive ink head is 3.0 mg/cm² or more, and a heating temperature of the recording medium in the second heating device is higher than a heating temperature of the recording medium in the first heating device by 40°C or more.

The above-described production method can be suitably performed by the production apparatus. The matters described in [1. Method for producing recorded product] can be applied to the apparatus for producing a recorded product, and thus the description thereof will be omitted below. The production apparatus may be an inkjet ejecting apparatus.

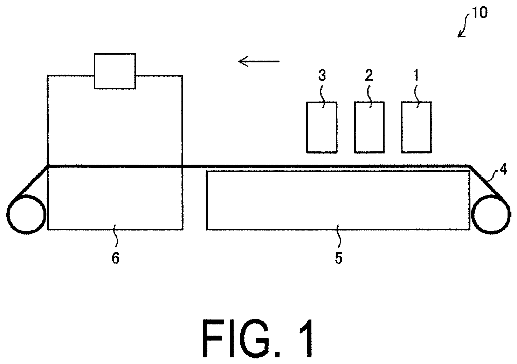

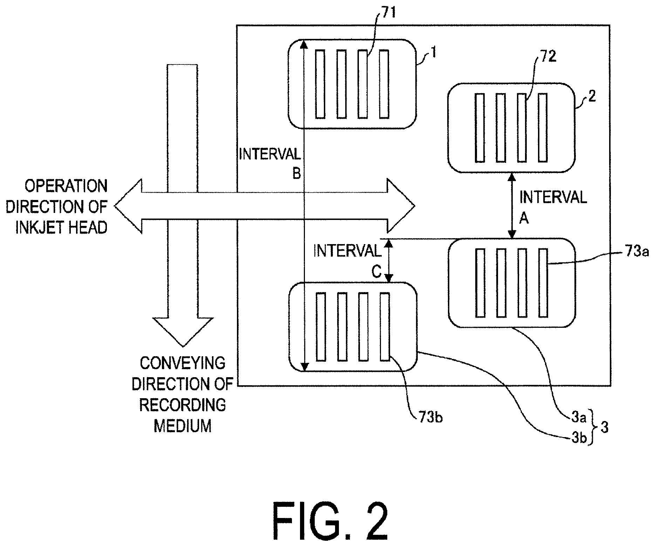

An example of the inkjet ejecting apparatus as the production apparatus will be described below with reference to FIGS. 1 and 2. An inkjet ejecting apparatus 10 of FIG. 1 includes a color ink head 1, a white ink head 2, and an adhesive ink head 3 as inkjet heads, a first heating device 5, and a second heating device 6. The inkjet ejecting apparatus 10 may include a conveyance path for conveying a recording medium 4. The color ink head 1 and the white ink head 2 correspond to a coloring material-containing ink head. The color ink head 1, the white ink head 2, and the adhesive ink head 3 are provided in this order along the conveying direction of the recording medium 4. Although the number of the adhesive ink head 3 illustrated in FIG. 1 is one, two or more adhesive ink heads may be provided.

The inkjet ejecting apparatus 10 performs a color ink depositing step by the color ink head 1, a white ink depositing step by the white ink head 2, and the adhesive ink depositing step by the adhesive ink head 3 while conveying the recording medium 4 by the conveyance path. In addition, the first heating step can be performed by the first heating device 5, and the second heating step can be performed by the second heating device 6. The recording medium 4 is conveyed in a direction from the first heating device 5 toward the second heating device 6. The first heating device 5 and the second heating device 6 can be connected by the conveyance path for conveying the recording medium 4. In FIG. 1, the first heating device 5 is illustrated as a contact heating device that heats the recording medium 4 from the back surface thereof, and the second heating device 6 is illustrated as a non-contact heating device. The first heating device 5 can also perform the image drying step.

As described above, the recording medium is preferably conveyed substantially flat through the image forming step performed by the coloring material-containing ink head, the adhesive ink depositing step performed by the adhesive ink head, the first heating step performed by the first heating device, and the second heating step performed by the second heating device. The difference in height of the conveyance path of the recording medium with respect to the horizontal plane throughout the image forming step, the adhesive ink depositing step, the first heating step, and the second heating step is preferably 3 cm or less, more preferably 2 cm or less, and still more preferably 1 cm or less.

The printing by the inkjet heads may be of a multi-pass method or a single-pass method, and is preferably of a multi-pass method.

FIG. 2 is a diagram illustrating the arrangement of the inkjet heads in the inkjet ejecting apparatus as viewed from a direction perpendicular to the operation direction of the inkjet heads and the conveying direction of the recording medium. In FIG. 2, the operating direction of the inkjet heads and the conveying direction of the recording medium are orthogonal to each other. In FIG. 2, two adhesive ink heads 3 (adhesive ink heads 3a and 3b) are illustrated. In a case where the number of the color ink heads 1 is one and the number of the white ink heads 2 is one, the number of the adhesive ink heads 3 is preferably one or two, and more preferably two.

In FIG. 2, the color ink head 1 includes nozzles 71, the white ink head 2 includes nozzles 72, the adhesive ink head 3a includes nozzles 73a, and the adhesive ink head 3b includes nozzles 73b. The number of nozzles of the adhesive ink head 3 is preferably two to four times the number of nozzles of the color ink head 1. The number of nozzles of the adhesive ink head 3 is preferably one to two times the number of nozzles of the white ink head 2. This makes it possible to increase an ejected amount from the adhesive ink head 3. Note that in a case where there are a plurality of respective inkjet heads, the number of nozzles means the total number of nozzles of the plurality of respective inkjet heads. In the case of FIG. 2, the number of nozzles of the adhesive ink head 3 means the total number of the nozzles 73a and the nozzles 73b.

In the present specification, a distance between the downstream end of the white ink head 2 and the upstream end of the adhesive ink head 3 in a direction parallel to the conveying direction of the recording medium is referred to as an "interval A". In the present specification, the downstream side and the upstream side correspond to the downstream side and the upstream side in the conveying direction of the recording medium. In a case where there are a plurality of white ink heads 2, the "downstream end" means the end on the most downstream side. In a case where there are a plurality of adhesive ink heads 3, the "upstream end" means the end on the most upstream side. In FIG. 2, the interval A means a distance between the downstream end of the white ink head 2 and the upstream end of the adhesive ink head 3a. From the viewpoint of shortening the time required for drying and suppressing printing misalignment, the interval A is preferably from 1 to 20 cm, more preferably from 2 to 10 cm, and still more preferably from 3 to 5 cm.

In the present specification, a distance between the upstream end of the color ink head 1 and the downstream end of the adhesive ink head 3 in the direction parallel to the conveying direction of the recording medium is referred to as an "interval B". In a case where there are a plurality of color ink heads 1, the "upstream end" means the end on the most upstream side. In a case where there are a plurality of adhesive ink heads 3, the "downstream end" means the end on the most downstream side. In FIG. 2, the interval B means a distance between the upstream end of the color ink head 1 and the downstream end of the adhesive ink head 3b. From the viewpoint of shortening the time required for drying and suppressing printing misalignment, the interval B is preferably from 15 to 50 cm, and more preferably from 15 to 30 cm.

In a case where there are a plurality of adhesive ink heads 3, the positions of the plurality of adhesive ink heads 3 in the direction parallel to the conveying direction of the recording medium may or need not be shifted from each other. In the present specification, a distance representing the positional deviation of the plurality of adhesive ink heads 3 in the direction parallel to the conveying direction of the recording medium is referred to as an "interval C". The positions of the plurality of adhesive ink heads 3 are based on the upstream ends of the respective adhesive ink heads 3. In FIG. 2, the interval C means a distance between the upstream end of the adhesive ink head 3a and the upstream end of the adhesive ink head 3b. From the viewpoint of ease of drying and prevention of liquid flow (flowing of an ink), the interval C is preferably from 0 to 10 cm, and more preferably more than 0 cm and 10 cm or less.

### 3. Method for producing transferred product

A method for producing a transferred product according to an embodiment of the present invention includes bringing a recorded product including an image produced by the above-described method for producing a recorded product into contact with a transfer target material, and transferring the image to the transfer target material by pressurization and heating. This makes it possible to produce a transferred product having an image excellent in adhesiveness to a transfer target material. The method for producing a transferred product may include a step of producing a recorded product including an image by the above-described method for producing a recorded product, and bringing the recorded product into contact with a transfer target material and transferring the image to the transfer target material by pressurization and heating. The matters described in [1. Method for producing recorded product] and [2. Apparatus for producing recorded product] can be applied to the method for producing a transferred product, and thus the description thereof will be omitted below.

The transferred product is obtained by transferring the image provided on the recorded product to a transfer target material, and includes the transfer target material and the image provided thereon. The transfer target material may be a fabric. In a case where the transfer target material is a fabric, the transferred product is also referred to as a printed fabric.

The fabric to be used is not particularly limited, and includes all textile products such as a cloth and a woven fabric. Examples of the fabric include a woven fabric, a nonwoven fabric, and a knitted fabric. A fiber constituting the fabric is also not particularly limited, and examples thereof include a natural fiber, a chemical fiber, and a mixture thereof.

Examples of the natural fiber include silk, cotton, and wool. Examples of the chemical fiber include a synthetic fiber, a recycled fiber, and a semi-synthetic fiber. Examples of the synthetic fiber include a polyester fiber, a nylon fiber, an acrylic fiber, a polyurethane fiber, a polyethylene fiber, a polypropylene fiber, and a vinylon fiber. Examples of the recycled fiber include rayon. Examples of the semi-synthetic fiber include acetate and triacetate. Among these, a fabric formed of cotton, a polyester fiber, a polypropylene fiber, a nylon fiber, or a mixture thereof is preferable.

The method of transfer is not particularly limited, and a method known in the related art can be employed. For example, the transfer preferably includes bringing a surface of the recorded product on which the adhesive layer is formed into contact with the transfer target material in a state where the surface faces the transfer target material, and a step of peeling off the recording medium from the transfer target material.

Examples of the method of pressurization and heating include a method in which the recorded product is brought into close contact with the transfer target material using a press machine, a heating drum, or the like and heated and pressurized. A heating temperature in the transfer is not particularly limited, but is preferably from 80 to 200°C, and more preferably from 100 to 180°C. Pressure in the transfer is also not particularly limited, but is preferably from 100 to 600 g/cm², and more preferably from 200 to 500 g/cm². The time period of close contact is preferably 1 second or longer, and more preferably 3 seconds or longer, from the viewpoint of further improving transferability. An upper limit of the time period of close contact is not particularly limited, but is preferably 1 minute or shorter, and more preferably 30 seconds or shorter, from the viewpoint of productivity. The time period of close contact is preferably from 1 second to 1 minute, and more preferably from 3 seconds to 30 seconds, from the above viewpoint.

The recording medium is peeled off from the transfer target material to produce a transferred product. Note that from the viewpoint of reducing the amount of ink remaining on the recording medium, it is preferable to peel off the recording medium after the temperature of the transfer target material becomes 60°C or lower (particularly 40°C or lower).

Furthermore, the obtained transferred product may be heated and pressurized by a press machine, a heating drum, or the like. When a heating and pressurizing treatment is additionally performed on the obtained transferred product, the transfer target material and the ink are more press-bonded to each other, thereby further improving fastness to wet rubbing. An additional heating temperature is not particularly limited, but is preferably from 80 to 200°C, and more preferably from 100 to 180°C. Pressure in additional pressurization is also not particularly limited, but is preferably from 100 to 600 g/cm², and more preferably from 200 to 500 g/cm². An additional heating and pressurizing time is also not particularly limited, but is preferably from 1 second to 1 minute, and more preferably from 3 seconds to 30 seconds.

In the additional heating and pressurizing treatment, a force-in paper may be sandwiched between the transferred product and a press machine, a heating drum, or the like. The force-in paper is also referred to as a fabric pressing sheet, a finishing sheet, a sheet for re-pressing, or the like. The force-in paper is preferably a silicone-based film. The shape of the force-in paper changes in accordance with the unevenness of the transfer target material (for example, fabric) in the additional heating and pressurizing treatment, and thus the ink can be pushed into the transfer target material, which can improve the transferability. The adhesive layer may have a smooth surface, and thus, the additional heating and pressurizing treatment using the force-in paper may greatly contribute to the adhesion of the ink to the transfer target material.

The present invention is not limited to each embodiment described above, and it may be changed in various ways within the scope of the claims. Thus, an embodiment achieved by appropriately combining technical means described herein with different embodiments will be included in the technical scope of the present invention.

An embodiment of the present invention may include the following configuration.
<1> A method for producing a recorded product, including: an image forming step of depositing an ink containing a coloring material onto a recording medium by an inkjet method and forming an image; an adhesive ink depositing step of depositing an adhesive ink onto the image by an inkjet method; a first heating step of drying the adhesive ink; a second heating step of further drying the adhesive ink after the first heating step and forming an adhesive layer, wherein in the adhesive ink depositing step, an amount of the adhesive ink deposited is 3.0 mg/cm² or more, and a heating temperature of the recording medium in the second heating step is higher than a heating temperature of the recording medium in the first heating step by 40°C or more.
<2> The method for producing a recorded product according to <1>, wherein the image forming step includes a color ink depositing step of depositing a color ink onto the recording medium by an inkjet method, and a white ink depositing step of depositing a white ink onto a coating film of the color ink on the recording medium by an inkjet method.
<3> The method for producing a recorded product according to <1> or <2>, further including an image drying step of drying the image before the adhesive ink depositing step.
<4> The method for producing a recorded product according to any one of <1> to <3>, wherein the first heating step is performed by a platen heater.
<5> The method for producing a recorded product according to any one of <1> to <4>, wherein the second heating step is performed by a non-contact heating device.
<6> The method for producing a recorded product according to any one of <1> to <5>, wherein the first heating step is performed simultaneously with the adhesive ink depositing step.
<7> The method for producing a recorded product according to any one of <1> to <6>, wherein the adhesive ink contains a resin, an aqueous organic solvent, and water.
<8> The method for producing a recorded product according to any one of <1> to <7>, wherein the adhesive ink contains one or more resins selected from the group consisting of an acrylic-based resin and a polyester-based resin.
<9> The method for producing a recorded product according to any one of <1> to <8>, wherein the adhesive ink contains a resin having a weight average molecular weight of 10000 to 700000.
<10> The method for producing a recorded product according to any one of <1> to <9>, wherein the adhesive ink is a clear ink.
<11> The method for producing a recorded product according to any one of <1> to <10>, wherein the recording medium is a film.
<12> The method for producing a recorded product according to any one of <1> to <11>, wherein the recorded product is a transfer medium to be used for transfer to a transfer target material.
<13> The method for producing a recorded product according to any one of <1> to <12>, wherein the first heating step is performed by a first heating device, the second heating step is performed by a second heating device, and the first heating device and the second heating device are connected to each other by a conveyance path for conveying the recording medium.
<14> A method for producing a transferred product, the method including bringing a recorded product including an image produced by the method for producing a recorded product described in any one of <1> to <13> into contact with a transfer target material, and transferring the image to the transfer target material by pressurization and heating.
<15> The method for producing a transferred product according to <14>, wherein the transfer target material is a fabric.
<16> An apparatus for producing a recorded product, the apparatus including: a coloring material-containing ink head configured to deposit an ink containing a coloring material onto a recording medium by an inkjet method and to form an image; an adhesive ink head configured to deposit an adhesive ink onto the image by an inkjet method; a first heating device configured to dry the adhesive ink; and a second heating device configured to further dry the adhesive ink after drying by the first heating device and to form an adhesive layer, wherein an amount of the adhesive ink deposited by the adhesive ink head is 3.0 mg/cm² or more, and a heating temperature of the recording medium in the second heating device is higher than a heating temperature of the recording medium in the first heating device by 40°C or more.
<17> The apparatus for producing a recorded product according to <16>, wherein the first heating device and the second heating device are connected to each other by a conveyance path for conveying the recording medium.

### Examples

An example of the present invention will be described below. Note that "parts" represents "parts by mass" and "%" represents "mass%" unless otherwise specified.

### Evaluation method

### Measurement of Tg of emulsion particles

The glass transition temperature (Tg) of the emulsion particles was measured by differential scanning calorimetry (DSC) under measurement conditions described below.
Measuring instrument: DSC 3500 (available from NETZSCH)
Sample container: Aluminum sealed container
Sample weight: 10 mg ± 2 mg
Measurement method: In an N₂ atmosphere, two cycles of temperature rising from -50°C to 150°C were performed. The heating/cooling rate was set to 10°C/min, and the holding time at -50°C and 150°C was set to 5 min. Using the analysis software proteus Analysis, the glass transition temperature was analyzed from the DSC curve chart in the second cycle of heating, and the value of the midpoint glass transition temperature was adopted.

### Measurement of average particle sizes of pigment and emulsion particles

The average particle size of a pigment was determined through cumulant method analysis by measuring particle sizes using a pigment dispersion obtained in each Production Example as a measurement sample and using a particle size distribution analyzer (available from Otsuka Electronics Co., Ltd., product number: FPAR-1000) based on the dynamic light scattering method. The average particle size of the emulsion particles was determined in the same manner as the average particle size of the pigment using an emulsion obtained in each Production Example as a measurement sample.

### Measurement of weight average molecular weight of emulsion particles

The weight average molecular weight (Mw) of the emulsion particles was measured by gel permeation chromatography (GPC) under conditions described below.
Measuring instrument: HLC-8320GPC (available from Tosoh Corporation)
Molecular weight column: TSK-GEL SuperMultiporeHZ (available from Tosoh Corporation)
Eluent: tetrahydrofuran (THF)
Standard substance for calibration curve: polystyrene (available from Tosoh Corporation)
Measurement method: A measurement target was dissolved in THF to have a solid content of about 0.2 mass%, and the solution filtered through a filter was used as a test sample to measure the molecular weight. The flow rate of the feed pump was 0.35 mL/min.

### Evaluation of occurrence of crack

The surface of a printed product after the second heating step obtained in each of Examples and Comparative Examples was visually evaluated. It was determined to be acceptable in a case where no crack was generated on the surface of the printed product, and determined to be unacceptable in a case where a crack was generated. Note that in the present specification, the image printed on the recording medium and the adhesive layer are collectively referred to as a printed product.

### Evaluation of adhesiveness

A printed product was transferred to a fabric using a transfer film obtained in each of Examples and Comparative Examples. Specifically, the transfer was performed using a transfer press machine TP-630M available from Horizon International, Inc., with the following setting: a heating temperature of 150°C, a pressing time of 10 seconds, and a pressing load of 3 kN (400 g/cm²).

After pressing, the transfer film was peeled off from the fabric, and whether the printed product was adhered to the fabric was visually confirmed. A case where the image was completely transferred was evaluated as A, a case where the image was transferred at a ratio of 90% or more was evaluated as B, and a case where the image was transferred at a ratio of less than 90% was evaluated as C. The ratio referred to herein means the ratio of the area of the image transferred to the fabric, which was calculated assuming that the area of the image printed on the transfer film was taken as 100%.

### Preparation of ink

### Preparation of pigment dispersion 1

A white pigment dispersion (1) containing titanium oxide as a white pigment, DISCORT N-14 (available from DKS Co. Ltd.) as a dispersant, and propylene glycol and water as a solvent was prepared. The solid content concentration was 55% and the average particle size of the pigment was 330 nm.

### Preparation of pigment dispersion 2

A blue pigment dispersion (2) containing C.I. Pigment Blue 15:3 as a blue pigment, JONCRYL 678 (available from BASF) as a dispersant, and dimethylaminoethanol and water as a solvent was prepared. The solid content concentration was 15% and the average particle size of the pigment was 90 nm.

### Emulsion Production Example 1

An acrylic-based resin emulsion (hereinafter, referred to as emulsion 1) was obtained by emulsion polymerization. The solid content of the emulsion 1 was 55%, and the emulsion particles contained in the emulsion 1 had a Tg of 10°C, an average particle size of 200 nm, and a weight average molecular weight of 300000.

### Emulsion Production Example 2

An acryl styrene-based resin emulsion (hereinafter, referred to as emulsion 2) was obtained by emulsion polymerization. The emulsion particles contained in the emulsion 2 had a Tg of -21°C, an average particle size of 200 nm, and a weight average molecular weight of 1100000.

### Emulsion Production Example 3

Elitel KT-0507 (polyester-based emulsion) available from UNITIKA LTD. (hereinafter, referred to as emulsion 3) was prepared. The solid content of the emulsion 3 was 25%, and the emulsion particles contained in the emulsion 3 had a Tg of -21°C, an average particle size of 150 nm, and a weight average molecular weight of 55000.

### Emulsion Production Example 4

Elitel KT-9204 (polyester-based emulsion) available from UNITIKA LTD. (hereinafter, referred to as emulsion 4) was prepared. The solid content of the emulsion 4 was 30%, and the emulsion particles contained in the emulsion 4 had a Tg of 18°C, an average particle size of 100 nm, and a weight average molecular weight of 50000.

### Emulsion Production Example 5

U-COAT DA-200 (polyether urethane-based emulsion) available from Sanyo Chemical Industries, Ltd. (hereinafter, referred to as emulsion 5) was prepared. The solid content of the emulsion 5 was 38%, and the emulsion particles contained in the emulsion 5 had a Tg of -70°C, and an average particle size of 100 nm.

### Preparation of white ink

A white ink was produced by mixing 30 parts of the emulsion 2 (15 parts as emulsion particles), 23 parts of the pigment dispersion 1, 1.2 parts of EPOCROS WS-700 (available from Nippon Shokubai Co., Ltd., solid content 25%) (0.3 parts as solid content), 2 parts of diethylene glycol monobutyl ether, 15 parts of triethylene glycol, 0.3 parts of a surfactant (available from Shin-Etsu Chemical Co., Ltd., KF-6011), and 28.5 parts of deionized water, and then filtering the mixture through a filter having a pore size of 1 µm (available from Advantec Co., Ltd., MCP-1-C10S).

### Preparation of cyan ink

A cyan ink was produced as a color ink in the same manner as in the preparation of the white ink except that the pigment dispersion 1 was changed to the pigment dispersion 2.

### Preparation of adhesive ink

Adhesive inks A to F were produced by mixing materials shown in Table 1. The unit of numerical values in Table 1 is parts by mass. KF-6011 is a surfactant available from Shin-Etsu Chemical Co., Ltd. as described above.

### [Table 1]

**(Table 1)**

| | Adhesive ink | | | | | |
|---|---|---|---|---|---|---|
| | A | B | C | D | E | F |
| Emulsion 1 | 20 | 18 | - | - | - | 10 |
| Emulsion 2 | - | - | 20 | - | - | - |
| Emulsion 3 | - | - | - | 20 | - | - |
| Emulsion 4 | - | - | - | - | 20 | - |
| Emulsion 5 | - | - | - | - | - | 10 |
| Pigment dispersion 1 | - | 2 | - | - | - | - |
| Propylene glycol | 17 | 17 | 17 | 17 | 17 | 17 |
| KF-6011 | 1 | 1 | 1 | 1 | 1 | 1 |

### [Apparatus and the like used]

### Recording medium

As a film serving as a recording medium, a PET film roll DFR-600 available from IMAGE MAGIC Inc. was used.

### Inkjet ejecting apparatus

An inkjet ejecting apparatus was produced by modifying a DTF printer DTTS-602 series available from IMAGE MAGIC Inc. The inkjet ejecting apparatus was in a multi-pass method and was equipped with three heads of Precision Core I3200 available from EPSON Corp., and the printing width was 600 mm. The three heads were a first head, a second head, and a third head in order from the upstream side in the conveying direction of the film. The first head was filled with the cyan ink, the second head was filled with the white ink, and the third head was filled with the adhesive ink. A platen heater was disposed as the first heating device immediately below the heads.

### Second heating device

As the second heating device, a DTTS-BF602 binder coater available from IMAGE MAGIC Inc. was used. No hot melt powder was applied and only an infrared heating device was used.

### Examples 1 to 13 and Comparative Examples 1 to 3

Using the inks prepared above, the following image forming step, adhesive ink depositing step, first heating step, and second heating step were performed, and various characteristics were evaluated. The temperatures in the first and second heating steps were determined by measuring the surface temperature of the transfer film in the central portion of each device using a K-thermocouple (available from AS ONE Corporation, KTO-10100M3).

### Image forming step and adhesive ink depositing step

The film was set in the inkjet ejecting apparatus, and the image forming step and the adhesive ink depositing step were performed by an inkjet method under conditions shown in Tables 2 and 3. In a case of using the white ink, solid printing was performed with the cyan ink using the first head, and then solid printing was performed thereon with the white ink using the second head in such a manner that the printing regions were overlapped with each other. Furthermore, solid printing was performed on the white ink with the adhesive ink using the third head in such a manner that the printing regions were overlapped with each other. In a case of using no white ink, solid printing was performed with the cyan ink, and then solid printing was performed thereon with the adhesive ink. An ejected amount of the cyan ink was 1 mg/cm², and an amount of the white ink ejected was 5 mg/cm².

### First heating step and second heating step

The film that had undergone the image forming step and the adhesive ink depositing step was subjected to the first heating step for 2 minutes and the second heating step for 5 minutes to prepare a recorded product. The heating temperatures (film surface temperature) in the first heating step and the second heating step were as shown in Tables 2 and 3.

### Evaluation results

The results are shown in Tables 2 and 3. Note that in Tables 2 and 3, the first heating temperature and the second heating temperature represent the film surface temperature in the first heating step and the film surface temperature in the second heating step, respectively.

### [Table 2]

**(Table 2)**

| | Examples 1 | Examples 2 | Examples 3 | Examples 4 | Examples 5 | Examples 6 | Examples 7 | Comparative Examples 1 |
|---|---|---|---|---|---|---|---|---|
| Adhesive ink | A | A | A | A | A | A | A | A |
| Presence or absence of white ink ejected | Presence | Presence | Presence | Presence | Presence | Presence | Presence | Presence |
| Ejected amount of adhesive ink [mg/cm²] | 8 | 8 | 8 | 8 | 8 | 8 | 8 | 8 |
| First heating temperature [°C] | 60 | 90 | 90 | 50 | 40 | 60 | 40 | 100 |
| Second heating temperature [°C] | 100 | 130 | 150 | 110 | 170 | 150 | 120 | 130 |
| Difference between first heating temperature and second heating temperature | 40 | 40 | 60 | 60 | 130 | 90 | 80 | 30 |
| Occurrence of cracks | Acceptable | Acceptable | Acceptable | Acceptable | Acceptable | Acceptable | Acceptable | Unacceptable |
| Adhesiveness | B | B | A | A | B | A | A | C |

### [Table 3]

**(Table 3)**

| | Comparative Examples 2 | Examples 8 | Comparative Examples 3 | Examples 9 | Examples 10 | Examples 11 | Examples 12 | Examples 13 |
|---|---|---|---|---|---|---|---|---|
| Adhesive ink | A | A | A | B | D | F | C | E |
| Presence or absence of white ink ejected | Presence | Presence | Presence | Absence | Presence | Presence | Presence | Presence |
| Ejected amount of adhesive ink [mg/cm²] | 8 | 4 | 2 | 8 | 8 | 8 | 8 | 8 |
| First heating temperature [°C] | 60 | 60 | 60 | 60 | 60 | 60 | 60 | 60 |
| Second heating temperature [°C] | 90 | 150 | 150 | 150 | 150 | 150 | 150 | 150 |
| Difference between first heating temperature and second heating temperature | 30 | 90 | 90 | 90 | 90 | 90 | 90 | 90 |
| Occurrence of cracks | Unacceptable | Acceptable | Acceptable | Acceptable | Acceptable | Acceptable | Acceptable | Acceptable |
| Adhesiveness | C | B | C | B | A | B | B | B |

In a case where the heating temperature in the second heating step was higher than the heating temperature in the first heating step by 40°C or more as in Examples 1 to 8, no crack was generated in the printed product. On the other hand, in a case where the temperature difference between the first heating step and the second heating step was less than 40°C as in Comparative Examples 1 and 2, cracks occurred in the printed product.

In addition, the transfer to the transfer target material was also favorable in Examples 1 to 8 as compared with Comparative Examples 1 to 3. It is also found from the comparison between Example 8 and Comparative Example 3 that the amount of the adhesive ink deposited is preferably 3.0 mg/cm² or more. Furthermore, even in a case where the composition of the adhesive ink was changed as in Examples 9 to 13, no crack was generated, and the transfer was good.

### Industrial Applicability

An aspect of the present invention can be used for production of a transfer film to be used for transfer to a transfer target material, production of a transferred product, and the like, for example.

### Reference Signs List

1 Color ink head
2 White ink head
3, 3a, 3b Adhesive ink head
4 Recording medium
5 First heating device
6 Second heating device
10 Inkjet ejecting apparatus
71, 72, 73a, 73b Nozzle

## Claims

1. A method for producing a recorded product, the method comprising:
an image forming step of depositing an ink containing a coloring material onto a recording medium by an inkjet method and forming an image;
an adhesive ink depositing step of depositing an adhesive ink onto the image by an inkjet method;
a first heating step of drying the adhesive ink; and
a second heating step of further drying the adhesive ink after the first heating step and forming an adhesive layer, wherein
in the adhesive ink depositing step, an amount of the adhesive ink deposited is 3.0 mg/cm² or more, and
a heating temperature of the recording medium in the second heating step is higher than a heating temperature of the recording medium in the first heating step by 40°C or more.

2. The method for producing a recorded product according to claim 1, wherein
the image forming step includes
a color ink depositing step of depositing a color ink onto the recording medium by an inkjet method, and
a white ink depositing step of depositing a white ink onto a coating film of the color ink on the recording medium by an inkjet method.

3. The method for producing a recorded product according to claim 1, further comprising an image drying step of drying the image before the adhesive ink depositing step.

4. The method for producing a recorded product according to claim 1, wherein the first heating step is performed by a platen heater.

5. The method for producing a recorded product according to claim 1, wherein the second heating step is performed by a non-contact heating device.

6. The method for producing a recorded product according to claim 1, wherein the first heating step is performed simultaneously with the adhesive ink depositing step.

7. The method for producing a recorded product according to claim 1, wherein the adhesive ink contains a resin, an aqueous organic solvent, and water.

8. The method for producing a recorded product according to claim 1, wherein the adhesive ink contains one or more resins selected from the group consisting of an acrylic-based resin and a polyester-based resin.

9. The method for producing a recorded product according to claim 1, wherein the adhesive ink contains a resin having a weight average molecular weight of 10000 to 700000.

10. The method for producing a recorded product according to claim 1, wherein the adhesive ink is a clear ink.

11. The method for producing a recorded product according to claim 1, wherein the recording medium is a film.

12. The method for producing a recorded product according to claim 1, wherein the recorded product is a transfer medium to be used for transfer to a transfer target material.

13. The method for producing a recorded product according to claim 1, wherein
the first heating step is performed by a first heating device,
the second heating step is performed by a second heating device, and
the first heating device and the second heating device are connected by a conveyance path for conveying the recording medium.

14. A method for producing a transferred product, the method comprising bringing a recorded product including an image produced by the method for producing a recorded product described in any one of claims 1 to 13 into contact with a transfer target material, and transferring the image to the transfer target material by pressurization and heating.

15. The method for producing a transferred product according to claim 14, wherein the transfer target material is a fabric.

16. An apparatus for producing a recorded product, the apparatus comprising:
a coloring material-containing ink head configured to deposit an ink containing a coloring material onto a recording medium by an inkjet method and to form an image;
an adhesive ink head configured to deposit an adhesive ink onto the image by an inkjet method;
a first heating device configured to dry the adhesive ink; and
a second heating device configured to further dry the adhesive ink after the drying by the first heating device and to form an adhesive layer, wherein
an amount of the adhesive ink deposited by the adhesive ink head is 3.0 mg/cm² or more, and
a heating temperature of the recording medium in the second heating device is higher than a heating temperature of the recording medium in the first heating device by 40°C or more.
